# EUROPÄISCHE PATENTSCHRIFT

(11) **EP 1 737 610 B1**
(45) Veröffentlichungstag und Bekanntmachung des Hinweises auf die Patenterteilung: **25.06.2008**
(21) Anmeldenummer: 05736341.8
(22) Anmeldetag: 28.04.2005
(51) Int. Cl.: B23P 19/06, B23P 11/00, B21J 15/12, F16B 37/06, F16B 17/00

(54) **VERFAHREN UND VORRICHTUNG ZUR ANBRINGUNG EINES BEFESTIGUNGSELEMENTS AN EIN BAUTEIL, INSBESONDERE AN EIN BLECHTEIL**
METHOD AND DEVICE FOR MOUNTING A FASTENING ELEMENT ON A PART, PARTICULARLY A SHEET METAL PART
PROCEDE ET DISPOSITIF PERMETTANT D'APPLIQUER UN ELEMENT DE FIXATION SUR UN COMPOSANT, EN PARTICULIER SUR UNE PIECE EN TOLE

(30) Priorität: 28.04.2004 DE 102004020676
(43) Veröffentlichungstag der Anmeldung: 03.01.2007
(73) Patentinhaber: PROFIL Verbindungstechnik GmbH & Co. KG, 61381 Friedrichsdorf (DE)
(72) Erfinder: DIEHL, Oliver, 61350 Bad Homburg v.d.H. (DE); HUMPERT, Richard, 61191 Rosbach v.d.H. (DE)
(74) Vertreter: Manitz, Finsterwald & Partner GbR
(86) Internationale Anmeldenummer: PCT/EP2005/004588
(87) Internationale Veröffentlichungsnummer: WO 2005/105364

(56) Entgegenhaltungen:
- EP-A- 0 678 679
- EP-A- 0 759 510
- EP-A- 0 957 273
- WO-A-99/15304
- DE-A1- 3 507 489
- DE-A1- 10 102 712
- DE-A1- 19 535 537
- DE-A1- 19 927 103
- DE-B- 1 300 800
- US-A- 5 634 674
- DATABASE WPI Section PQ, Week 200405 Derwent Publications Ltd., London, GB; Class P52, AN 2004-050375 XP002336501 -& SE 521 812 C2 (HEINO T) 9. Dezember 2003 (2003-12-09)

## Beschreibung

Die vorliegende Erfindung betrifft ein Verfahren zur Anbringung eines Befestigungselementes an ein Bauteil, beispielsweise an ein Blechteil, wobei das Befestigungselement eine Symmetrieachse, einen Kopfteil mit einer Anlagefläche, die in Berührung mit dem Bauteil gelangt, einen ein Gewinde aufweisenden Befestigungsabschnitt sowie mindestens eine das Material des Bauteils aufnehmende Hinterschneidung aufweist, und das Material des Bauteils an die Anlagefläche und in die Hinterschneidung mittels eines ersten zur Ausbildung des Befestigungselements passende Matrizenform aufweisenden Werkzeugs gedrückt wird, gemäß Oberbergriff des Anspruchs 1, sowie ein system gemäß Oberbergriff des Anspruchs 39.

Ein Verfahren und eine Vorrichtung der oben genannten Art sind auf dem Gebiet der Anbringung von Befestigungselementen an Blechteile bestens bekannt. Beispielsweise beschreiben die europäischen Patente 0 678 679 und 0 958 100 wie ein Befestigungselement, das im Handel unter der Bezeichnung EBF von der Firma Profil Verbindungstechnik GmbH & Co. KG erhältlich ist, an ein Blechteil angebracht werden kann. Ferner beschreiben die europäischen Patente 0 759 510 und 0 957 273 wie Varianten der so genannten RSU Mutterelement der Firma Profil Verbindungstechnik GmbH & Co. KG an Blechteilen angebracht werden können. Die oben beschriebenen Elemente werden häufig Einpresselemente genannt, da sie keinen umzubördelnden Nietabschnitt aufweisen. Die DE-A1-35 07 489 wird als nächstliegender Stand der Technik gegenüber dem Gegenstand der Ansprüche 1 und 39 angesehen.

Um die bisher bekannten Verfahren durchzuführen, kommen hauptsächlich Pressen mit erheblichen Presskräften zur Anwendung, die für die Anbringung der Befestigungselemente an Blechteilen sorgen, und zwar insbesondere dann, wenn das Blechteil auch eine bestimmte Formgebung in der Presse erhalten soll. Nicht nur Elemente der Firma Profil Verbindungstechnik GmbH & Co. KG werden auf diese Art und Weise an Blechteilen befestigt, sondern auch eine Reihe von weiteren Befestigungselementen von anderen Wettbewerbern. Es ist auch bekannt, anstatt eine Presse für die Anbringung der Befestigungselemente zu verwenden, diese in C-Gestellen und/oder mittels Robotern an Blechteilen zu befestigen, wobei in beiden Fällen entsprechende Kraft erzeugende Vorrichtungen vorhanden sein müssen, die oft Kräfte in zweistelliger Tonnenhöhe erzeugen müssen.

Mit solchen Vorrichtungen werden die Befestigungselemente in einem Hub an das Blechteil angebracht, das Verfahren läuft also relativ schnell ab.

Es gibt aber in kleineren und größeren Werkstätten eine Vielzahl von möglichen Anwendungen beispielsweise für die Herstellung von kleineren Serien, wo keine schwereren Pressen oder die anderen genannten Einrichtungen (C-Gestelle oder Roboter) verfügbar sind, entweder weil die entsprechenden Betriebe keine solchen Einrichtungen besitzen oder weil diese anderweitig ausgelastet sind.

Es ist deshalb die Aufgabe der vorliegenden Erfindung, zuverlässige Verfahren und systeme vorzuschlagen, die im Stande sind, Befestigungselemente der eingangs genannten Art an Blechteilen anzubringen, ohne dass hierzu erhebliche Kräfte aufgewendet werden müssen, so dass Betriebe auch ohne große Investitionen in relativ schwere Einrichtungen im Stande sind, Befestigungselemente an Bauteilen, insbesondere an Blechteilen, zuverlässig anzubringen, wobei das erfindungsgemäße Verfahren und das erfindungsgemäße system für eine Vielzahl verschiedener Befestigungselemente verwendet werden können.

Obwohl die Erfindung in erster Linie für die Anwendung mit Blechteilen gedacht ist, gibt es auch andere Bauteile, beispielsweise aus Kunststoff oder in Form von Laminaten oder Gussteile aus duktilen Materialien, die mittels der vorliegenden Erfindung bearbeitet werden können.

Zur Lösung dieser Aufgabe wird ein Verfahren der eingangs genannten Art vorgesehen, das sich dadurch auszeichnet, dass eine lokale Kraft auf den Kopfteil des Befestigungselements oder auf das Werkzeug seitlich der Symmetrieachse ausgeübt wird und kreisförmig um die Symmetrieachse herum bei gleichzeitiger Durchführung einer relativen Zustellbewegung zwischen dem Werkzeug und dem Befestigungselement, zwischen denen das Bauteil angeordnet ist, bewegt wird, um das Material des Bauteils in die Hinterschneidung zu drücken.

Es kann sich bei dem Befestigungselement um ein Bolzenelement handeln, bspw. um ein EBF-Element, wobei das Gewinde an einem Schaftteil des Befestigungselements ausgebildet ist und der Schaftteil vor dem Ausüben der lokalen Kraft zur Bewegung des Materials des Bauteils in die Hinterschneidung durch ein vorgelochtes Bauteil geführt wird.

Alternativ hierzu kann es sich bei dem Befestigungselement um ein Mutterelement handeln, bspw. um ein RSU-Element, wobei das Gewinde als Gewindebohrung des Befestigungselements ausgebildet ist und ggf. im Kopfteil angeordnet werden kann und das Verfahren mit einem gelochten oder ungelochten Bauteil durchgeführt wird, was im Prinzip auch bei einem Bolzenelement möglich ist. Es soll darauf hingewiesen werden, dass das Gewinde bei einem Mutterelement, das an einem vorgelochten Bauteil angebracht ist, erst nachträglich geschnitten werden kann, d.h. eine ursprünglich glatte Bohrung des Mutterelements erst nach der Anbringung des Elements an das Bauteil durch Anwendung einer Gewinde formenden oder schneidenden Schraube zu einem Gewinde geformt wird.

Erfindungsgemäß wird anstelle einer großen, schnell wirkenden Kraft eine wesentlich geringere Kraft verwendet, die lokal auf das Befestigungselement bzw. das Bauteil einwirkt, und zwar über eine vergleichsweise lange Zeit (die aber ohne weiteres im Sekundenbereich liegen kann), wobei die Kraft progressiv um die Symmetrieachse des Befestigungselements bewegt wird und lokal auf das Befestigungselement bzw. das Blechteil einwirkt, bis die Anbringung, d.h. die Verhakung des Materials des Bauteils mit dem Befestigungselement bzw. mit der vorgesehenen Hinterschneidung oder Hinterschneidungen vollendet ist. Dadurch, dass die verwendete Kraft im Vergleich zu den bisher verwendeten Kräften deutlich geringer oder kleiner ausfällt, ist die zur Durchführung des Verfahrens benötigte Vorrichtung wesentlich weniger belastet und kann entsprechend leichter und kompakter gebaut werden und verbraucht noch weniger Material als bisher erforderlich war.

Ferner kann beim Durchführen des Verfahrens mit Matrizen gearbeitet werden, die mit den für die entsprechenden Elemente bisher verwendeten Matrizen identisch sind oder unwesentlich abgeändert wurden, so dass bewährte und in der Praxis erprobte Systeme auch mit dem neuen Verfahren und der neuen Vorrichtung weiterhin verwendet werden können.

Besonders bevorzugte Varianten des erfindungsgemäßen Verfahrens sowie der entsprechenden Vorrichtungen gehen aus den Patentansprüchen sowie der weiteren Beschreibung hervor.

Die Erfindung wird nachfolgend unter Bezugnahme auf die Zeichnung und anhand von Ausführungsbeispielen näher erläutert, in der Zeichnung zeigen:
- Fig. 1A: eine erste erfindungsgemäße Ausführungsform der Anbringung eines an sich bekannten Bolzenelements an ein Blechteil gerade vor Beginn der Umformung des Blechteils,
- Fig. 1B: eine Darstellung entsprechend der Fig. 1A, jedoch gerade am Ende der Umformung des Blechteils,
- Fig. 2A und 2B: Figuren entsprechend den Fig. 1A und 1B, jedoch von einer Variante des erfindungsgemäßen Verfahrens bzw. des erfindungsgemäßen systems,
- Fig. 3A und 3B: Figuren entsprechend den Fig. 1A und 1B, jedoch von einer weiteren Variante des erfindungsgemäßen Verfahrens bzw. des erfindungsgemäßen systems,
- Fig. 4A und 4B: Figuren entsprechend den Fig. 1A und 1B, jedoch von einer anderen Variante des erfindungsgemäßen Verfahrens bzw. des erfindungsgemäßen system,
- Fig. 5A: eine erste erfindungsgemäße Ausführungsform der Anbringung eines an sich bekannten Mutterelements an ein Blechteil gerade vor Beginn der Umformung des Blechteils,
- Fig. 5B: eine Darstellung entsprechend der Fig. 5A, jedoch gerade am Ende der Umformung des Blechteils,
- Fig. 6A und 6B: Figuren entsprechend den Fig. 5A und 5B, jedoch von einer Variante des erfindungsgemäßen Verfahrens bzw. des erfindungsgemäßen systems,
- Fig. 7A und 7B: Figuren entsprechend den Fig. 5A und 5B, jedoch von einer weiteren Variante des erfindungsgemäßen Verfahrens bzw. des erfindungsgemäßen systems und
- Fig. 8A und 8B: Figuren entsprechend den Fig. 1A und 1B, jedoch von einer anderen Variante des erfindungsgemäßen Verfahrens bzw. des erfindungsgemäßen systems.

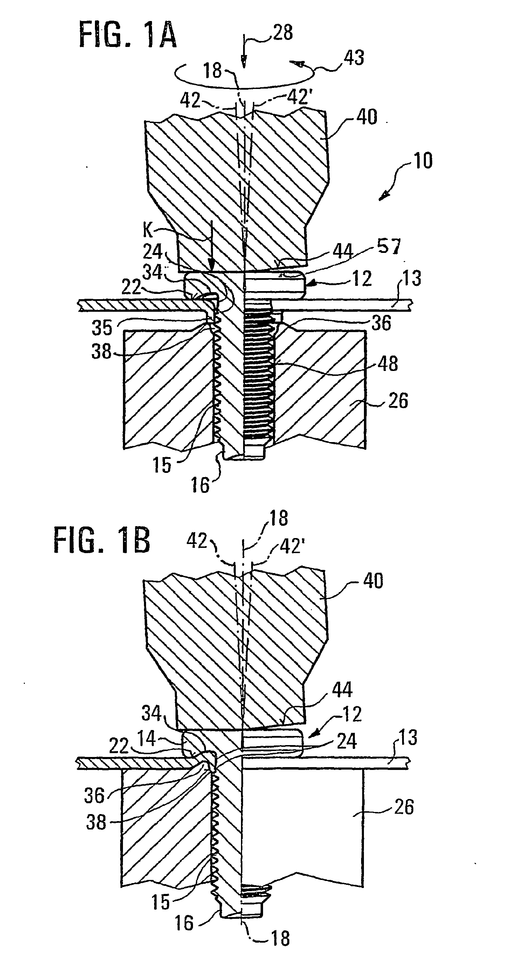

Bezug nehmend auf die Fig. 1A und 1B wird eine Vorrichtung 10 gezeigt, die ausgelegt ist, um ein Verfahren zur Anbringung eines Befestigungselements 12 an ein vorgelochtes, plastisch verformbares Bauteil 13, beispielsweise ein Blechteil, durchzuführen. Das Befestigungselement weist einen Kopfteil 14 und einen ein Gewinde aufweisenden Schaftteil 16 auf, der konzentrisch zu einer Symmetrieachse 18 des Befestigungselementes angeordnet ist und über eine sich in radialer Richtung erstreckende Anlagefläche 22 in den Kopfteil 14 übergeht. Es handelt sich bei dem Befestigungselement im konkreten Fall um ein EBF-Bolzenelement der Fa. Profil Verbindungstechnik GmbH & Co. KG, so dass der Befestigungsabschnitt, der die spätere Anbringung eines weiteren Bauteils an das aus dem Bolzenelement und dem ersten Bauteil bestehenden Zusammenbauteil durch eine auf den Schaftteil 16 aufgeschraubte Mutter ermöglicht, hier durch ein konzentrisch zur Symmetrieachse angeordnetes Gewinde realisiert ist. Das hier dargestellte Befestigungselement ist stellvertretend für eine Vielzahl von verschiedenen Elementen zu verstehen und weist außerdem mindestens eine das Material des Bauteils aufnehmende Hinterschneidung auf. Wie in Fig. 1B gezeigt, wird das Material des Bauteils 13 an die Anlagefläche 22 und in die Hinterschneidung 24 mittels eines ersten zur Ausbildung des Befestigungselements eine passende Matrizenform aufweisenden Werkzeugs 26 gedrückt, das einer herkömmlichen Matrize für EBF-Elemente darstellt.

Erfindungsgemäß wird eine lokale Kraft K auf den Kopfteil 14 des Befestigungselements 12 seitlich der Symmetrieachse 18 ausgeübt, die Position dieser Kraft wird kreisförmig um die Symmetrieachse herum bewegt und es findet gleichzeitig eine relative Zustellbewegung in Pfeilrichtung 28 zwischen dem Werkzeug 26 und dem Befestigungselement, zwischen denen das Bauteil angeordnet ist, statt, um das Material des Bauteils in die Hinterschneidung 24 zu drücken.

Das Befestigungselement 12 weist zusätzlich zu der radialen Hinterschneidung 24, die durch das Gewinde 15 im Bereich des Kopfteils ausgebildet sein kann, eine axiale Ringnut 34 oder konkave Felder in der Anlagefläche 22 auf. Das Schaftteil 16 des Befestigungselements wird durch einen das Loch des vorgelochten Bauteils 13 umgebenden Ringkragen 35 von der dem Ringkragen 35 abgewandten Seite des Bauteils hindurchgeführt.

Die Matrize 26 weist einen mittleren Ringvorsprung 36 mit einer zumindest im Wesentlichen konusförmigen Innenfläche 38 auf, die das Material des Ringkragens 35 radial nach innen in die Hinterschneidung 24 drückt, wie aus der Fig. 1B ersichtlich. Ferner drückt der Ringvorsprung das Blechmaterial in die Ringnut 34 hinein.

Die lokale Kraft K wird auf den Kopfteil 14 des Befestigungselements 12 mit einem zweiten Werkzeug 40 ausgeübt, das in einer bezogen auf die Symmetrieachse 18 geneigten Stellung 42 angeordnet ist und um die Symmetrieachse 18 gedreht wird (Pfeil 43). Das zweite Werkzeug 40 hat eine dem Kopfteil 14 des Befestigungselements zugewandte konusförmige Stirnseite 44 und arbeitet in diesem Beispiel direkt auf den Kopfteil 14 des Befestigungselements 12.

Die relative axiale Zustellbewegung (Pfeil 28) zwischen der den Kopfteil 14 aufnehmenden Matrize 26 und dem Werkzeug 40 wird durchgeführt bis der Ringkragen 35 vollständig umgebördelt und vollständig in Anlage mit dem Befestigungselement 12 gebracht ist, wie in Fig. 1B gezeigt ist. Da das Werkzeug 40 mit der Schrägachse 42 ausgerichtet ist und um die Symmetrieachse 18 gedreht wird, bewegt sich die Schrägachse 42 kontinuierlich und kann beispielsweise bei 42' zu einem späteren Zeitpunkt gefunden werden.

Zu jedem Zeitpunkt während der Umformung des Blechteils befindet sich der Matrizenvorsprung 36 in Berührung mit dem Ringkragen nur über eine verhältnismäßig kleine Fläche, die sich progressiv um die Symmetrieachse 18 bei Drehung des Werkzeugs 40 bewegt und zu einer progressiven lokalen Verformung des Ringkragens führt. Die gleichzeitig stattfindende Zustellbewegung in Pfeilrichtung 28 führt in Kombination mit dieser Drehbewegung zu der progressiven Verhakung des Blechmaterials mit der Ringnut oder den konkaven Feldern in der Anlagefläche, d.h in der entsprechenden Seite des Kopfteils, sowie mit der Hinterschneidung, so dass diese Verhakung mit insgesamt weniger Umdrehungen des Werkzeugs 40 fertig gestellt werden kann.

Zur Durchführung dieses Vorgangs kann eine Vorrichtung (nicht gezeigt) ähnlich einer Säulenbohrmaschine zur Anwendung gelangen, bei der die Matrize 26 auf dem Tisch der Säulenbohrmaschine und das zweite Werkzeug 40 auf dem Bohrkopf der Säulenbohrmaschine montiert wird, wohl in einer Position entsprechend der Schrägachse 42, die die Drehung um die Symmetrieachse 18 sicherstellt. Die Zustellbewegung kann per Hand durch manuelle Zustellung des Bohrkopfs auf den Tisch zu erfolgen (wie üblich bei einer Säulenbohrmaschine) oder durch einen Antrieb, der den Tisch auf den Bohrkopf zu oder den Bohrkopf auf den Tisch zu bewegt. Natürlich können auch Sondervorrichtungen vorgesehen werden, die die erforderlichen Bewegungen sicherstellen. Das Blechteil kann von Hand oder durch einen kleinen Roboter auf den Schaftteil 16 des Bolzenelements und die Matrize positioniert werden, wobei der Schaftteil des Bolzenelements in eine mittlere Bohrung 48 der Matrize 40 gelangt. Das Blechteil kann am Tisch oder an einer der Matrize 26 benachbart oder umgebend angeordneten Abstützung (nicht gezeigt) befestigt bzw. geklemmt werden, sofern die Matrize 26 selbst nicht zu diesem Zweck herangezogen wird, was durchaus möglich ist.

Bei der Blechumformung werden etwaige Verdrehsicherungsmerkmale, die am Befestigungselement angebracht sind, beispielsweise im Bereich der Anlagefläche 22 und/oder am Übergang vom Schaftteil 16 in die Anlagefläche 22, in Eingriff mit dem Bauteil 13 gebracht. Solche Verdrehsicherungsmerkmale können bspw. die Form von radialen Rippen aufweisen, die die Ringnut 34 überbrücken und diese in konkaven Felder aufteilt, wie bei einem EBF-Bolzen der Fall ist.

In einer Weiterentwicklung des Verfahrens kann das zweite Werkzeug 40 nicht nur um die Symmetrieachse 18 des Befestigungselements gedreht werden, sondern gleichzeitig um die Neigungsachse 42, die durch die geneigte Stellung des zweiten Werkzeugs definiert ist. Eine solche zusätzliche Drehbewegung ist mit dem Pfeil 43 in Fig. 1A angedeutet.

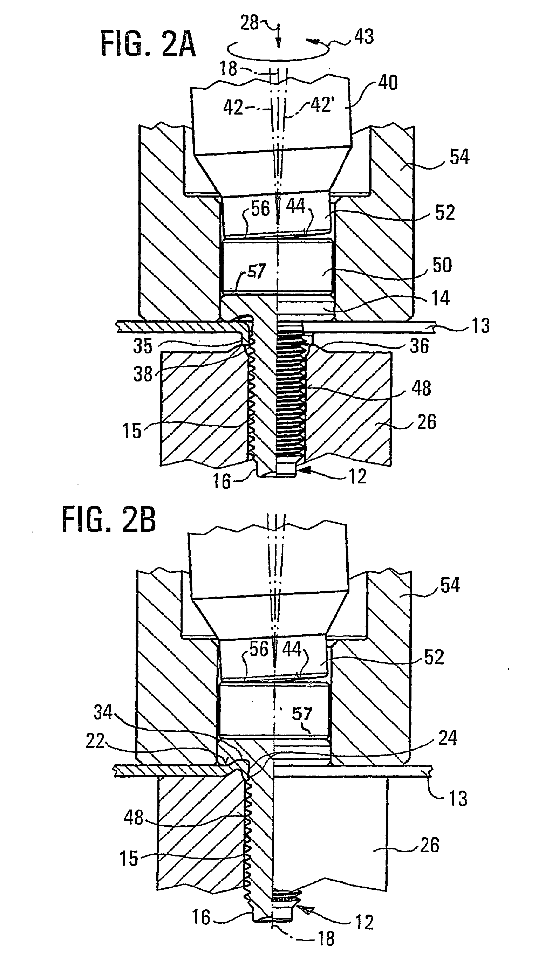

Eine weitere Variante des Verfahrens bzw. des systems aus einem Befestigungselement und einer Vorrichtung wird nunmehr anhand der Fig. 2A und 2B beschrieben. Es werden bei der Beschreibung der Fig. 2A und 2B die gleichen Bezugszeichen für Teile verwendet, die bisher in der Fig. 1A- und 1B-Ausführung für entsprechende Teile oder Teile, die die gleiche Funktion aufweisen; verwendet wurden. Es versteht sich, dass die gleiche Beschreibung für diese Teile gilt, wie für die entsprechenden Teile der Ausführung gemäß Fig. 1A und 1B, es sei denn, etwas Gegenteiliges wird zum Ausdruck gebracht. Diese Konvention wird auch für die weitere Beschreibung verwendet. Wenn nur kleine Abweichungen zwischen Teilen vorhanden sind, werden die Teile mit den gleichen Bezugszeichen, jedoch zusätzlich mit einem Strich wie , , , oder '"" ergänzt.

In dieser Variante arbeitet das zweite Werkzeug 40 über ein zylindrisches Zwischenstück 50 auf den Kopfteil 14 des Befestigungselements 12. Das zylindrische Zwischenstück 50 und ein dem zylindrischen Zwischenstück zugewandter vorderen Abschnitt 52 des zweiten Werkzeugs 40 werden von einem rohrförmigen Führungsteil 54 mit etwas radialem Spiel geführt.

Die dem Kopfteil 14 des Befestigungselements 12 zugewandte Stirnseite 44 des zweiten Werkzeugs 40 weist eine zumindest im Wesentlichen linienförmige Berührung 56 mit dem Zwischenstück 50 auf.

Während das zweite Werkzeug 40 in der Fig. 1A, 1B Ausführung auf einer Ringfläche 57 des Kopfteils des Befestigungselements arbeitet tut dies in der Ausführung gemäß Fig. 2A, 2B das zylindrische Zwischenstück 50.

Auch hier werden bei der Umformbewegung etwaige Verdrehsicherungsmerkmale, die am Befestigungselement angebracht bzw. ausgebildet sind, beispielsweise im Bereich der Anlagefläche und/oder am Übergang vom Schaftteil in die Anlagefläche, in Eingriff mit dem Bauteil 13 gebracht.

Auch hier besteht die Möglichkeit, das zweite Werkzeug 40 nicht nur um die Symmetrieachse 18 des Befestigungselements zu drehen, sondern gleichzeitig auch um die Neigungsachse 42, die durch die geneigte Stellung des zweiten Werkzeugs 40 definiert ist.

Die Ausbildung der Matrize 26 und die Aufnahme des Schaftteils 16 des Befestigungselements in die Bohrung 48 der Matrize sind mit der Ausführung gemäß Fig. 1A und 1B identisch und werden hier nicht extra beschrieben.

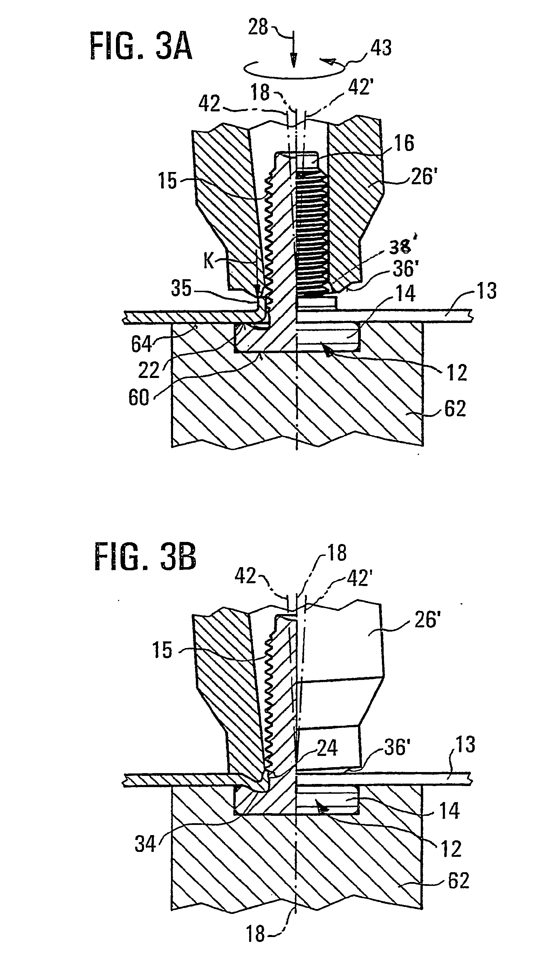

Ein drittes erfindungsgemäßes Verfahren bzw. ein drittes erfindungsgemäßes system aus einem Befestigungselement und einer Vorrichtung zur Anbringung des Befestigungselements, das im Zusammenhang mit den Fig. 1A und 1B bereits ausführlich beschrieben ist, sind in den Fig. 3A und 3B dargestellt. Es werden bei der Beschreibung der Fig. 3A und 3B die gleichen Bezugszeichen für Teile verwendet, die bisher in der Fig. 1A- und 1B-Ausführung für entsprechende Teile oder Teile, die die gleiche Funktion aufweisen, verwendet wurden. Es versteht sich, dass die gleiche Beschreibung für diese Teile gilt, wie für die entsprechenden Teile der Ausführung gemäß Fig. 1A und 1B, es sei denn, etwas Gegenteiliges wird zum Ausdruck gebracht. Diese Konvention wird auch für die weitere Beschreibung verwendet.

Wie in Fig. 3A gezeigt wird der Kopfteil 14 des Befestigungselements 12 in eine Ausnehmung 60 eines Werkzeugs 62 aufgenommen, dessen Stirnseite 64 das Bauteil 13 zumindest im Wesentlichen in der Höhe der Anlagefläche 22 abstützt. Die lokale Kraft K wird auf das Bauteil 13, insbesondere auf dessen Ringkragen 35, mit einem Werkzeug 26' ausgeübt, das an seinem in Fig. 1A untere Stirnseite eine Gestalt entsprechend der Stirnseite der Matrize 26 der bisherigen Ausführungsformen aufweist, wobei die Form des Ringvorsprungs 36' gegenüber dem Ringvorsprung 36 der Matrize 26 der Fig. 1A, 1B und 2A, 2B leicht freigemacht werden kann um die taumelnde Bewegung des Werkzeugs 26' zu berücksichtigen. Aufgrund dieser kleinen Unterschiede ist das Werkzeug mit dem Bezugszeichen 26' und der Ringvorsprung bzw. dessen innere Fläche mit dem Bezugszeichen 36' bzw. 38' gekennzeichnet. Das Werkzeug 26' ist, bezogen auf die Symmetrieachse 18, in einer geneigten Stellung angeordnet und wird in Pfeilrichtung 43 um die Symmetrieachse 18 gedreht.

Hier arbeitet das erste Werkzeug 26' direkt auf dem Bauteil im Bereich des Befestigungselements.

Auch hier werden bei der Umformbewegung etwaige Verdrehsicherungsmerkmale, die am Befestigungselement angebracht sind, beispielsweise im Bereich der Anlagefläche und/oder am Übergang vom Schaftteil in die Anlagefläche, in Eingriff mit dem Bauteil 13 gebracht.

Auch hier besteht die Möglichkeit, das Werkzeug 26' nicht nur um die Symmetrieachse 18 des Befestigungselements zu drehen, sondern gleichzeitig auch um die Neigungsachse 42, die durch die geneigte Stellung des Werkzeugs 26' definiert ist.

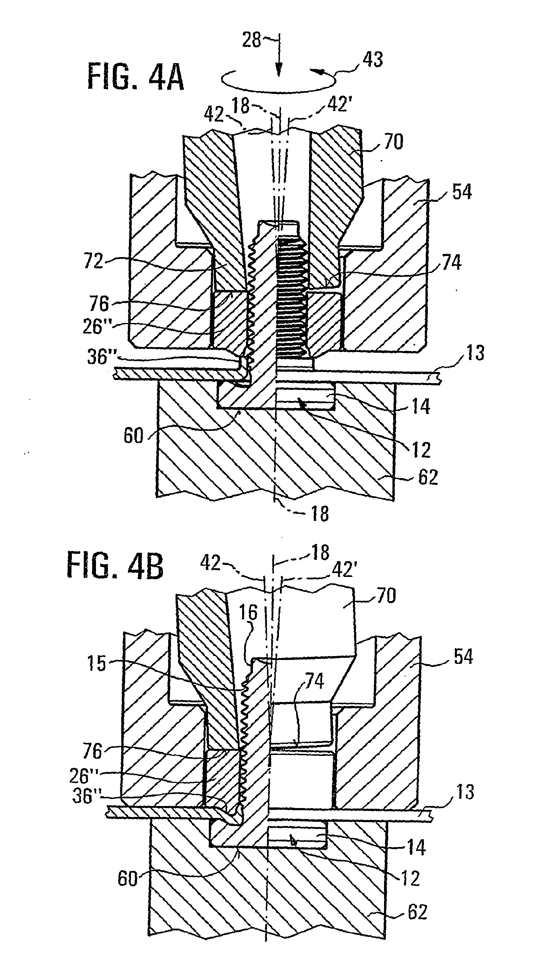

Ein viertes erfindungsgemäßes Verfahren bzw. ein viertes erfindungsgemäßes system aus einem Befestigungselement und einer Vorrichtung zur Anbringung des Befestigungselements, das im Zusammenhang mit den Fig. 1A und 1B bereits ausführlich beschrieben ist, sind in den Fig. 4A und 4B dargestellt. Es werden bei der Beschreibung der Fig. 4A und 4B die gleichen Bezugszeichen für Teile verwendet, die bisher für entsprechende Teile oder Teile mit der gleichen Funktion verwendet wurden. Es versteht sich, dass die gleiche Beschreibung für diese Teile gilt, wie für die bisherigen Ausführungen, es sei denn, etwas Gegenteiliges wird zum Ausdruck gebracht.

Diese vierte Ausführungsform zeichnet sich dadurch aus, dass das erste Werkzeug 26" als zylindrisches Zwischenstück ausgebildet ist, das auf dem Bauteil im Bereich des Befestigungselements arbeitet, und dass ein drittes Werkzeug 70 die lokale Kraft K auf das erste Werkzeug 26" ausübt.

Das erste Werkzeug 26" und ein diesem zylindrischen Zwischenstück zugewandter vorderen Abschnitt 72 des dritten Werkzeugs werden von einem rohrförmigen Führungsteil 54 mit etwas radialem Spiel geführt werden. Die dem Bauteil zugewandte Stirnseite 74 des dritten Werkzeugs 70 hat eine Konusform und eine zumindest im Wesentlichen linienförmige Berührung 76 mit der dem Bauteil abgewandten Seite des ersten Werkzeugs 26".

Auch hier werden bei der Umformbewegung etwaige Verdrehsicherungsmerkmale, die am Befestigungselement angebracht bzw. ausgebildet sind, beispielsweise im Bereich der Anlagefläche und/oder am Übergang vom Schaftteil in die Anlagefläche, in Eingriff mit dem Bauteil 13 gebracht.

Auch hier besteht die Möglichkeit, das dritte Werkzeug 70 nicht nur um die Symmetrieachse 18 des Befestigungselements zu drehen, sondern gleichzeitig auch um die Neigungsachse 42, die durch die geneigte Stellung des dritten Werkzeugs 70 definiert ist.

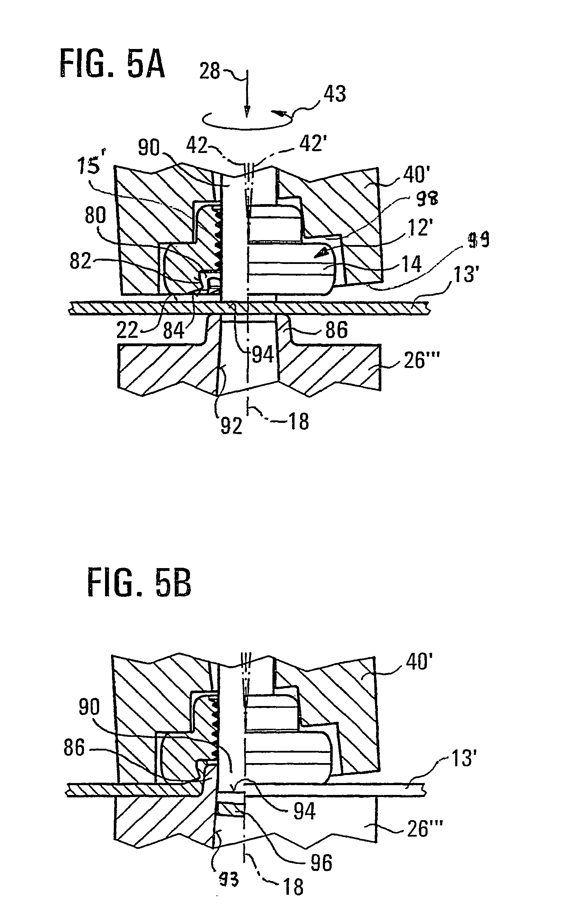

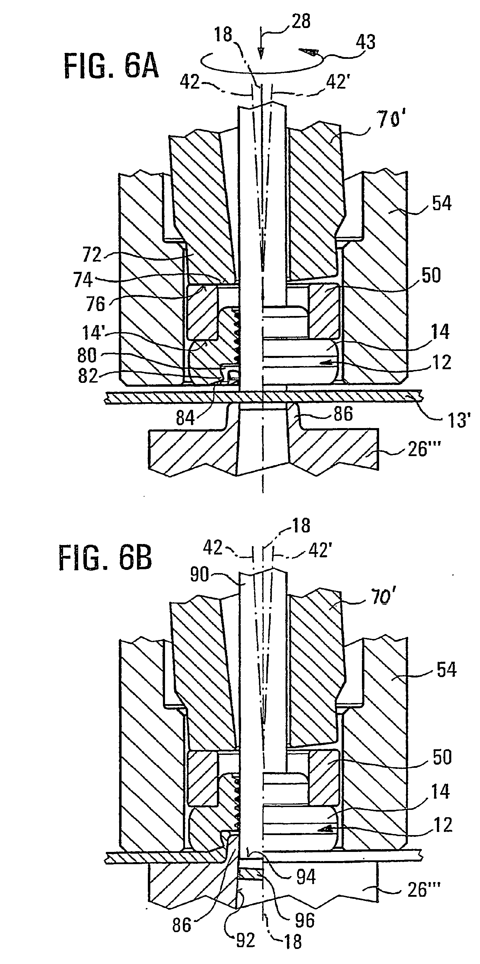

Eine weitere Variante des erfindungsgemäßen Verfahrens bzw. des erfindungsgemäßen systems ist in den Fig. 5A und 5B gezeigt. Es handelt dungsgemäßen systems ist in den Fig. 5A und 5B gezeigt. Es handelt sich hier bei dem Befestigungselement 12' um ein Mutterelement, wobei das Gewinde als Gewindebohrung 15' des Befestigungselements ausgebildet ist und gegebenenfalls im Kopfteil 14 angeordnet werden kann. Das Verfahren kann bei dieser Ausführungsform, wie auch bei den späteren Ausführungsformen gemäß den Fig. 6A, 6B; 7A,7B; und 8A,8B mit einem gelochten oder ungelochten Bauteil 513' durchgeführt werden.

In der nachfolgenden Beschreibung der weiteren Ausführungsformen werden die gleiche Bezugszeichen für Teile verwendet, die die gleiche Funktion haben wie Teile der ersten vier Ausführungsformen und es versteht sich dass die bisherige Beschreibung analog für diese Teile gilt. Wie ersichtlich wird sind die vier weitere Ausführungsformen gemäß den noch zu beschreibenden Figuren beinahe identisch zu verstehen wie die erste vier Ausführungsformen so lange man berücksichtigt dass sie ein Mutterelement anstelle eines Bolzennelements betreffen, wobei das Mutterelement anders gestaltet ist als das Bolzenelement vor allem im Bereich der Anbringung an das Blechteil. Es handelt sich bei dem hier dargestellten Element um ein RSU-Element, wie oben angegeben. Anders bei der Ausführung gemäß den weiteren Figuren ist aber auch das es sich bei dem Bauteil um ein ungelochtes Bauteil handelt, das bei Anbringung des Mutterelements durchstanzt wird. Nichtsdestotrotz könnte das Mutterelement mit einem vorgelochten Bauteil verwendet werden und sogar mit einem vorgelochten Bauteil, das entsprechend den bisherigen Figuren mit einem Ringkragen wie 35 versehen ist.

Bei dem Mutterelement handelt es sich in allen nachfolgenden Beispielen um ein RSU-Element so wie oben angegeben. Danach weist das Befestigungselement 12 im Kopfteil 14 radial innerhalb einer zumindest im Wesentlichen ringförmigen Anlagefläche 22 eine Ausnehmung 80 auf mit mindestens einer radialen Hinterschneidung, beispielsweise eine ringförmige Hinterschneidung oder bevorzugt (wie im eigentlichen RSU-Element realisiert) mit diskreten, stellenweise an einer Wandung der Ausnehmung ausgebildeten Hinterschneidungen 82, denen vorzugsweise entsprechende, stellenweise in der ringförmigen Anlagefläche 22 vorgesehene Vertiefungen 84 zugeordnet sind. Durch die Wirkung des ersten die Matrizenform aufweisenden Werkzeugs 26'" wird Material des Bauteils in die Hinterschneidung(en) 82 und in die Vertiefungen 84 gedrückt.

Wenn es sich bei dem Bauteil 13 um ein vorgelochtes Bauteil handelt, drückt das erste die Matrizenform aufweisende Werkzeug 26'" das Blechmaterial um den Rand des durch das Vorlochen erzeugten Loches in die Ausnehmung 80 hinein.

Alternativ hierzu wenn es sich bei dem Bauteil 13 um ein vorgelochtes Bauteil handelt mit einem das durch das Vorlochen erzeugte Loch umgebenden Ringkragen 35, der in die Ausnehmung 80 eingeführt wird, drückt das erste die Matrizenform aufweisende Werkzeug 26'" das Blechmaterial im Bereich des Ringkragens 80 in die Hinterschneidung(en) 82 hinein.

Das die Matrizenform aufweisende Werkzeug 26'" drückt das Material des Bauteils auch in die stellenweise in der ringförmigen Anlagefläche vorgesehenen Vertiefungen 84 hinein.

Zu den oben beschriebenen Zwecken weist das eine Matrizenform aufweisende erste Werkzeug 26'" einen mittleren rohrförmigen, gegebenenfalls leicht konusförmig ausgebildeten Vorsprung 86 aufweist, der das Material des Bauteils radial nach außen in die Hinterschneidung(en) 82 und ggf. in die Ausnehmung 80 bzw. in den Ausnehmungen 84 drückt.

Das Durchstanzen des Blechteils erfolgt in den nachfolgend beschriebenen Ausführungsbeispielen dadurch, dass es sich bei dem Bauteil um ein ungelochtes Bauteil handelt und dass das das Befestigungselement 12 aufnehmende Werkzeug, bzw. das zweite Werkzeug, einen konzentrisch zum Befestigungselement angeordneten Stift 90 aufweist, der durch die Bohrung 92 des Befestigungselements 12' hindurchragt und dessen freie Stirnseite 94 mit dem hohlen die Matrizenform aufweisenden ersten Werkzeug 26'" zusammenarbeitet, um einen Butzen 96 aus dem Bauteil 13' herauszuschneiden, der durch die mittlere Bohrung 93 des die Matrizenform aufweisenden Werkzeugs 26''' entsorgt wird. Der Schaft 90 kann als vorlaufender Lochstempel realisiert werden, der benutzt wird, um das Blechteil vor dem Anfang der Taumelbewegung zu lochen, um das Blechmaterial um das Loch herum in die Ausnehmung des Elements hineinzuformen.

Die Kraft, die erforderlich ist, um den Lochstempel zu betätigen, ist relativ niedrig und kann leicht in Form der Wirkung einer Handhebelpresse aufgeschraubt werden, die zur Bewegung des Stiftes 90 vorgesehen ist. Zum Beispiel ist in einer herkömmlichen Presse bei Anwendung eines RSU-Elements in der Größe M6 mit einem Blechteil von 0.8 mm Dicke eine Kraft von etwa 400 kgf erforderlich, um den Stanzbutzen aus dem Blechteil herauszustanzen, während eine Kraft von etwa 6000 kgf benötigt wird, um das Blechmaterial um das Loch herum in die Ausnehmung hineinzuformen. Daher ist das Stanzen des Loches im Blechteil unproblematisch, und zwar selbst dann, wenn eine Vorrichtung niedrigen Gewichts verwendet wird, um das Blechmaterial um das Loch herum in die Ausnehmung entsprechend der vorliegenden Lehre hineinzuformen.

Die oben genannten Überlegungen gelten für alle Ausführungsvarianten entsprechend der vorliegenden Lehre, bei denen ein Lochstempel verwendet wird, um ein Loch im Blechteil auszubilden, bevor das Befestigungselement an dem Blechteil angebracht wird. Der Stift bzw. Lochstempel kann auch zur Zentrierung des Elements beitragen, sollte aber ausreichenden Freiraum in Bezug auf die Bohrung des Elements aufweisen, um die Taumelbewegung des Elements nicht zu behindern.

Bei der Ausführungsform gemäß Fig. 5A und 5B ist das die Matrizenform aufweisende erste Werkzeug 26'" eine für die Anbringung eines RSU-Elements übliche Matrize. Die lokale Kraft K wird auf den Kopfteil des Befestigungselements mit dem zweiten Werkzeug ausgeübt, das in einer bezogen auf die Symmetrieachse 18 geneigten Stellung 42 angeordnet ist und um die Symmetrieachse 18 gedreht wird.

Das zweite Werkzeug 40' weist eine dem Kopfteil 14 des Befestigungselements 12' zugewandte konusförmige Fläche 98 sowie eine konusförmige Stirnseite 99 auf. In dieser Ausführungsform arbeitet das zweite Werkzeug 40' direkt auf dem Kopfteil 14 des Befestigungselements 12.

Alternativ hierzu kann das zweite Werkzeug 70' entsprechend der Ausführung gemäß Fig. 6A und 6B über ein zylindrisches Zwischenstück 50 auf dem Kopfteil 14 des Befestigungselements 12' arbeiten.

Wie bisher kann das zylindrische Zwischenstück 50 und ein dem zylindrischen Zwischenstück zugewandter vorderen Abschnitt 72 des zweiten Werkzeugs 70 von einem rohrförmigen Führungsteil 54 mit etwas radialem Spiel geführt werden. Die dem Kopfteil 14 des Befestigungselements 12' zugewandte Stirnseite 74 des zweiten Werkzeugs 70 hat eine zumindest im Wesentlichen linienförmige Berührung 76 mit dem zylindrischen Zwischenstück 50. Auch hier arbeitet das zylindrische Zwischenstück 50 auf einer Ringfläche 14' des Kopfteils des Befestigungselements.

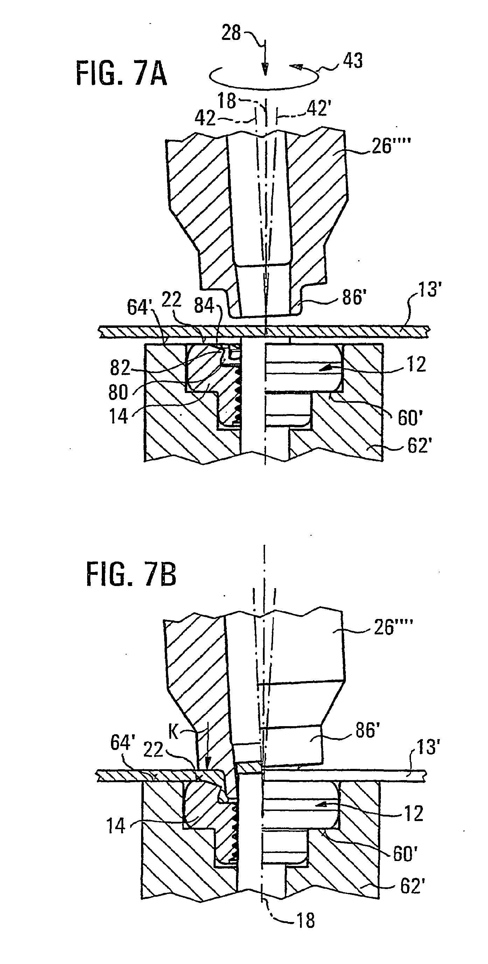

In der nächsten Ausführungsform gemäß Fig. 7A und 7B ist der Kopfteil 14 des Befestigungselements 12' in eine Ausnehmung 60' eines Werkzeugs 62' aufgenommen wird, dessen Stirnseite 64' das Bauteil 13' zumindest im Wesentlichen in der Höhe der Anlagefläche 22' abstützt. Das erste Werkzeug 26"", das die lokale Kraft K auf das Bauteil 13' ausübt, ist in einer bezogen auf die Symmetrieachse 18 geneigten Stellung 42 angeordnet und wird um die Symmetrieachse 18 gedreht. Hier arbeitet das erste Werkzeug 26"" direkt auf dem Bauteil 13' im Bereich des Befestigungselements 12'.

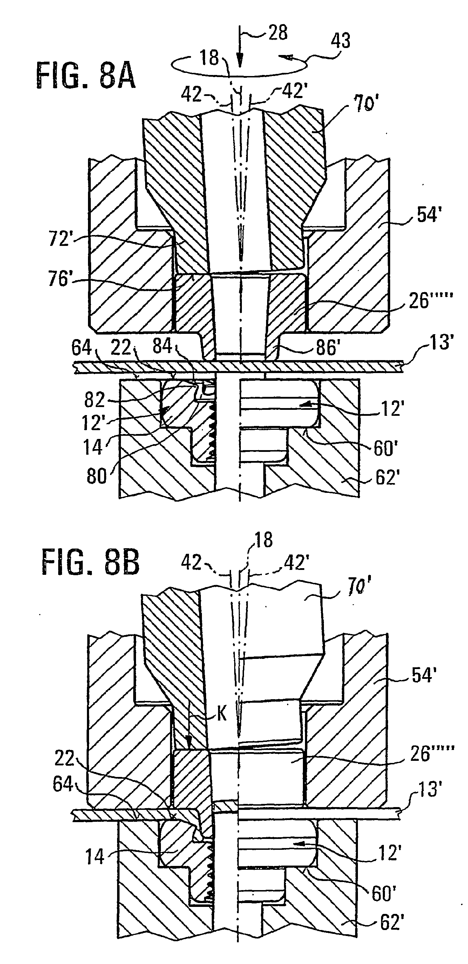

In der letzten Ausführungsform gemäß den Fig. 8A und 8B ist das erste die Matrizenform aufweisende Werkzeug 26""' als zylindrisches Zwischenstück ausgebildet, das auf dem Bauteil 13' im Bereich des Befestigungselements 12' arbeitet. Das Werkzeug 70' übt die lokale Kraft K auf das erste Werkzeug 26""' aus.

Auch hier werden das erste Werkzeug 26""' und ein diesen zugewandter vorderer Abschnitt 72' des Werkzeugs 70' von einem rohrförmigen Führungsteil 54' mit etwas radialem Spiel geführt.

Ferner hat auch hier die dem Bauteil zugewandte Stirnseite 76' des ersten Werkzeugs eine zumindest im Wesentlichen linienförmige Berührung mit dem ersten Werkzeug 26""'. Das Werkzeug 70' hat zu diesem Zweck eine dem Kopfteil des Befestigungselements zugewandte konusförmige Stirnseite.

Bei allen Ausführungsformen kann das Befestigungselement Verdrehsicherungsmerkmale im Bereich der Auflagefläche und/oder des Übergangs von der Auflagefläche in einen etwaigen Schaftteil und/oder im Bereich einer hohlförmigen Vertiefung des Befestigungselements aufweisen, wobei das Material des Bauteils durch die Wirkung der lokalen Kraft und der Zustellbewegung auch in Eingriff mit den Verdrehsicherungsmerkmale gebracht wird, die gegebenenfalls durch die mindestens eine Hinterschneidung oder durch Vertiefungen in der Anlagefläche realisiert werden können.

Schließlich soll darauf hingewiesen werden, dass für das Blechteil alle Stahl- oder Aluminium- oder Magnesiumblechteile in Frage kommen, die Tiefziehqualitäten aufweisen, während für das Funktionselement etwas festere Werkstoffe verwendet werden.

Bei allen Ausführungsformen können auch als Beispiel für den Werkstoff der Funktionselemente alle Materialien genannt werden, die im Rahmen der Kaltverformung die Festigungswerte der Klasse 8 gemäß ISO-Standard oder höher erreichen, beispielsweise eine 35B2-Legierung gemäß DIN 1654. Die so gebildeten Befestigungselemente eignen sich u.a. für alle handelsüblichen Stahlwerkstoffe für ziehfähige Blechteile wie auch für Aluminium oder dessen Legierungen. Auch können Aluminiumlegierungen, insbesondere solche mit hoher Festigkeit, für die Funktionselemente benutzt werden, z.B. AlMg5. Auch kommen Funktionselemente aus höherfesten Magnesiumlegierungen wie bspw. AM50 in Frage.

## Patentansprüche

1. Verfahren zur Anbringung eines Befestigungselementes (12; 12') an ein Bauteil, beispielsweise an ein Blechteil (13; 13'), wobei das Befestigungselement eine Symmetrieachse (18), einen Kopfteil (14) mit einer Anlagefläche (22), die in Berührung mit dem Bauteil (13) gelangt, einen ein Gewinde (15; 15') aufweisenden Befestigungsabschnitt sowie mindestens eine das Material des Bauteils aufnehmende Hinterschneidung (24; 82) aufweist, und das Material des Bauteils an die Anlagefläche und in die Hinterschneidung mittels eines ersten zur Ausbildung des Befestigungselements passende Matrizenform aufweisenden Werkzeugs (26; 26'; 26", 26"'; 26"", 26""') gedrückt wird,
**dadurch gekennzeichnet,**
**dass** eine lokale Kraft (K) auf den Kopfteil (14) des Befestigungselements (12; 12') oder auf das Werkzeug (26; 26'; 26"; 26"'; 26""; 26""') ' seitlich der Symmetrieachse (18) ausgeübt wird und kreisförmig um die Symmetrieachse herum bei gleichzeitiger Durchführung einer relativen Zustellbewegung zwischen dem Werkzeug (26; 26'; 26"; 26"'; 26""; 26""')und dem Befestigungselement (12; 12'), zwischen denen das Bauteil (13; 13') angeordnet ist, bewegt wird, um das Material des Bauteils in die Hinterschneidung (24; 82) zu drücken.

2. Verfahren nach Anspruch 1,
**dadurch gekennzeichnet,**
**dass** es sich bei dem Befestigungselement um ein Bolzenelement (12) handelt, wobei das Gewinde (15) an einem Schaftteil (16) des Befestigungselements ausgebildet ist, und dass der Schaftteil (16) vor dem Ausüben der lokalen Kraft (K) zur Bewegung des Materials des Bauteils in die Hinterschneidung (24) durch ein vorgeformtes Loch im Bauteil, d.h. durch ein vorgelochtes Bauteil (13) geführt wird.

3. Verfahren nach Anspruch 2
**dadurch gekennzeichnet,**
**dass** das die Matrizenform aufweisende Werkzeug eine Matrize (26) ist und dass die lokale Kraft (K) auf den Kopfteil (14) des Befestigungselements mit einem zweiten Werkzeug (40) ausgeübt wird, das in einer bezogen auf die Symmetrieachse (18) geneigten Stellung (42) angeordnet ist und um die Symmetrieachse gedreht wird.

4. Verfahren nach Anspruch 3,
**dadurch gekennzeichnet,**
**dass** das zweite Werkzeug (40) eine dem Kopfteil des Befestigungselements zugewandte konusförmige Stirnseite (44) aufweist.

5. Verfahren nach Anspruch 4,
**dadurch gekennzeichnet,**
**dass** das zweite Werkzeug (40) direkt auf den Kopfteil (14) des Befestigungselements (12) arbeitet.

6. Verfahren nach einem der Ansprüche 2 bis 4,
**dadurch gekennzeichnet,**
**dass** das zweite Werkzeug (40) über ein zylindrisches Zwischenstück (50) auf den Kopfteil (14) des Befestigungselements (12) arbeitet.

7. Verfahren nach Anspruch 6,
**dadurch gekennzeichnet,**
**dass** das zylindrische Zwischenstück (50) und ein dem zylindrischen Zwischenstück zugewandter vorderen Abschnitt (52) des zweiten Werkzeugs (40) von einem rohrförmigen Führungsteil (54) mit etwas radialem Spiel geführt werden.

8. Verfahren nach einem der vorhergehenden Ansprüche,
**dadurch gekennzeichnet,**
**dass** die dem Kopfteil (14) des Befestigungselements zugewandte Stirnseite (44) des zweiten Werkzeugs (40) eine zumindest im Wesentlichen linienförmige Berührung (56) mit dem Kopfteil (14) bzw. mit dem Zwischenstück (50) aufweist.

9. Verfahren nach einem der vorhergehenden Anspruche 2 bis 8,
**dadurch gekennzeichnet,**
**dass** das zweite Werkzeug (40) oder das zylindrische Zwischenstück (50) auf einer Ringfläche (57) des Kopfteils (14) des Befestigungselements (12) arbeitet.

10. Verfahren nach Anspruch 2,
**dadurch gekennzeichnet,**
**dass** der Kopfteil (14) des Befestigungselements (12) in eine Ausnehmung (60) eines zweiten Werkzeugs (62) aufgenommen wird, dessen Stirnseite (64) das Bauteil (13) zumindest im Wesentlichen in der Höhe der Anlagefläche (22) abstützt, und dass die lokale Kraft (K) auf das Bauteil (13) mit dem ersten Werkzeug (26') ausgeübt wird, das in einer bezogen auf die Symmetrieachse (18) geneigten Stellung (42, 42') angeordnet ist und um die Symmetrieachse gedreht wird.

11. Verfahren nach Anspruch 10,
**dadurch gekennzeichnet,**
**dass** das erste Werkzeug (26'; 26") direkt auf dem Bauteil (13) im Bereich des Befestigungselements (12) arbeitet.

12. Verfahren nach Anspruch 10,
**dadurch gekennzeichnet,**
**dass** das erste Werkzeug als zylindrisches Zwischenstück (26") ausgebildet ist, das auf dem Bauteil (13) im Bereich des Befestigungselements (12) arbeitet, und dass ein weiteres Werkzeug (40) die lokale Kraft auf das erste Werkzeug (26") ausübt.

13. Verfahren nach Anspruch 6,
**dadurch gekennzeichnet,**
**dass** das erste Werkzeug (26) und ein dem zylindrischen Zwischenstück (50) zugewandter vorderen Abschnitt (72) des dritten Werkzeugs von einem rohrförmigen Führungsteil (54) mit etwas radialem Spiel geführt werden.

14. Verfahren nach einem der vorhergehenden Ansprüche 2 bis 13,
**dadurch gekennzeichnet,**
**dass** die dem Bauteil zugewandte Stirnseite des ersten Werkzeugs (40) eine zumindest im Wesentlichen linienförmige Berührung mit dem Bauteil (14) aufweist.

15. Verfahren nach Anspruch 12 oder 13,
**dadurch gekennzeichnet,**
**dass** das weitere Werkzeug (40) eine dem Kopfteil (14) des Befestigungselements (12) zugewandte konusförmige Stirnseite (74) aufweist.

16. Verfahren nach einem der vorhergehenden Ansprüche 2 bis 15,
**dadurch gekennzeichnet,**
**dass** das Befestigungselement (12) eine axiale Ringnut (34) oder konkave Felder in der Anlagefläche sowie eine radiale Hinterschneidung (24) aufweist, die durch das Gewinde (15) im Bereich des Kopfteils (14) ausgebildet sein kann, und dass das Befestigungselement (12) durch einen das Loch des vorgelochten Bauteils umgebenden Ringkragen (35) von der dem Ringkragen (35) abgewandten Seite des Bauteils (13) hindurchgeführt wird.

17. Verfahren nach Anspruch 16,
**dadurch gekennzeichnet,**
**dass** das eine Matrizenform aufweisende erste Werkzeug (26) einen mittleren Ringvorsprung (36) mit einer zumindest im Wesentlichen konusförmigen Innenfläche (38) aufweist, die das Material des Ringkragens (35) radial nach innen in die Hinterschneidung (24) drückt.

18. Verfahren nach Anspruch 1,
**dadurch gekennzeichnet,**
**dass** es sich bei dem Befestigungselement um ein Mutterelement (12') handelt, wobei das Gewinde als Gewindebohrung (15') des Befestigungselements ausgebildet ist und gegebenenfalls im Kopfteil (14) angeordnet werden kann, und das Verfahren mit einem gelochten oder ungelochten Bauteil (13') durchgeführt wird.

19. Verfahren nach Anspruch 18
**dadurch gekennzeichnet,**
**dass** das die Matrizenform aufweisende erste Werkzeug eine Matrize (26"') ist und dass die lokale Kraft (K) auf den Kopfteil (14) des Befestigungselements (12') mit einem zweiten Werkzeug (40') ausgeübt wird, das in einer bezogen auf die Symmetrieachse (18) geneigten Stellung (42, 42') angeordnet ist und um die Symmetrieachse gedreht wird.

20. Verfahren nach Anspruch 19,
**dadurch gekennzeichnet,**
**dass** das zweite Werkzeug (40') eine dem Kopfteil (14) des Befestigungselements (13') zugewandte konusförmige Stirnseite (98) auf weist.

21. Verfahren nach Anspruch 19 oder 20,
**dadurch gekennzeichnet,**
**dass** das zweite Werkzeug (40') direkt auf dem Kopfteil (14) des Befestigungselements (12') arbeitet.

22. Verfahren nach einem der Ansprüche 18 bis 20,
**dadurch gekennzeichnet,**
**dass** das zweite Werkzeug (70') über ein zylindrisches Zwischenstück (50) auf dem Kopfteil (14) des Befestigungselements (12') arbeitet.

23. Verfahren nach Anspruch 22,
**dadurch gekennzeichnet,**
**dass** das zylindrische Zwischenstück (50) und ein dem zylindrischen Zwischenstück zugewandter vorderen Abschnitt (72) des zweiten Werkzeugs von einem rohrförmigen Führungsteil (54) mit etwas radialem Spiel geführt werden.

24. Verfahren nach einem der vorhergehenden Ansprüche 18 bis 23,
**dadurch gekennzeichnet,**
**dass** die dem Kopfteil (14) des Befestigungselements (12') zugewandte Stirnseite (98; 74) des zweiten Werkzeugs (40'; 70') eine zumindest im Wesentlichen linienförmige Berührung (97; 76) mit dem Kopfteil (14) oder mit dem zylindrischen Zwischenstück (50) aufweist.

25. Verfahren nach einem der vorhergehenden Anspruche 18 bis 24,
**dadurch gekennzeichnet,**
**dass** das zweite Werkzeug (40') oder das zylindrische Zwischenstück (50) auf einer Ringfläche (14') des Kopfteils (14) des Befestigungselements (12') arbeitet.

26. Verfahren nach Anspruch 18,
**dadurch gekennzeichnet,**
**dass** der Kopfteil (14) des Befestigungselements (12') in eine Ausnehmung (60') eines zweiten Werkzeugs (62') aufgenommen wird, dessen Stirnseite (64') das Bauteil (13') zumindest im Wesentlichen in der Höhe der Anlagefläche (22) abstützt, und dass die lokale Kraft (K) auf das Bauteil (13') mit dem ersten Werkzeug (26"") ausgeübt wird, das in einer bezogen auf die Symmetrieachse (18) geneigten Stellung (42, 42') angeordnet ist und um die Symmetrieachse gedreht wird.

27. Verfahren nach Anspruch 26,
**dadurch gekennzeichnet,**
**dass** das erste Werkzeug (26"") direkt auf dem Bauteil (13') im Bereich des Befestigungselements (12') arbeitet.

28. Verfahren nach Anspruch 26,
**dadurch gekennzeichnet,**
**dass** das erste Werkzeug (26""') als zylindrisches Zwischenstück ausgebildet ist, das auf dem Bauteil (13') im Bereich des Befestigungselements (12') arbeitet, und dass ein drittes Werkzeug (70') die lokale Kraft (K) auf das erste Werkzeug (26""') ausübt.

29. Verfahren nach Anspruch 28,
**dadurch gekennzeichnet,**
**dass** das erste Werkzeug (26""') und ein dem zylindrischen Zwischenstück (76') zugewandter vorderen Abschnitt (72') des dritten Werkzeugs (70') von einem rohrförmigen Führungsteil (54') mit etwas radialem Spiel geführt werden.

30. Verfahren nach einem der vorhergehenden Ansprüche 18 bis 29,
**dadurch gekennzeichnet**,
' dass die dem Bauteil (13') zugewandte Stirnseite des ersten Werkzeugs (26"") eine zumindest im Wesentlichen linienförmige Berührung mit dem Bauteil aufweist.

31. Verfahren nach Anspruch 28 oder 29,
**dadurch gekennzeichnet,**
**dass** das dritte Werkzeug (70') eine dem Kopfteil (14) des Befestigungselements (12') zugewandte konusförmige Stirnseite aufweist.

32. Verfahren nach einem der vorhergehenden Ansprüche 18 bis 31,
**dadurch gekennzeichnet,**
**dass** das Befestigungselement (12') im Kopfteil (14) radial innerhalb einer zumindest im Wesentlichen ringförmigen Anlagefläche (22) eine Ausnehmung (80) mit mindestens einer radialen Hinterschneidung (82), beispielsweise eine ringförmige Hinterschneidung (82) oder diskreten, stellenweise an einer Wandung der Ausnehmung ausgebildeten Hinterschneidungen (82), denen gegebenenfalls entsprechende, stellenweise in der ringförmigen Anlagefläche vorgesehene Vertiefungen (84) zugeordnet sind, aufweist, und dass durch die Wirkung des ersten die Matrizenform aufweisenden Werkzeugs (26"'; 26""; 26""') Material des Bauteils in die Hinterschneidung(en) (82) gedrückt wird.

33. Verfahren nach Anspruch 32.
**dadurch gekennzeichnet,**
**dass** es sich bei dem Bauteil um ein vorgelochtes Blechteil (13') handelt und dass das erste die Matrizenform aufweisende Werkzeug (26"; 26""; 26""') das Material des Blechteils um den durch das Vorlochen erzeugten Rand des Blechteils auch in die Ausnehmung hineindrückt.

34. Verfahren nach Anspruch 32,
**dadurch gekennzeichnet,**
**dass** es sich bei dem Bauteil um ein vorgelochtes Blechteil (13') handelt mit einem das durch das Vorlochen erzeugte Loch umgebenden Ringkragen, der in die Ausnehmung (80) eingeführt wird, und dass das erste die Matrizenform aufweisende Werkzeug (26"'; 26""; 26""') das Material des Blechteils (13') im Bereich des Ringkragens in die Hinterschneidung(en) (82) hineindrückt.

35. Verfahren nach Anspruch 32,
**dadurch gekennzeichnet,**
**dass** das die Matrizenform (26"'; 26""; 26""') aufweisende Werkzeug das Material des Blechteils (13') auch in die stellenweise in der ringförmigen Anlagefläche (22) vorgesehenen Vertiefungen (84) hineindrückt.

36. Verfahren nach einem der Ansprüche 18 bis 35,
**dadurch gekennzeichnet,**
**dass** das eine Matrizenform aufweisende erste Werkzeug (26"'; 26""; 26""') einen mittleren rohrförmigen, gegebenenfalls leicht konusförmig ausgebildeten Vorsprung (86) aufweist, der das Material des Bauteils radial nach außen in die Hinterschneidung(en) (82) und ggf. in die Ausnehmung (80) drückt.

37. Verfahren nach einem der Ansprüche 18 bis 32,
**dadurch gekennzeichnet,**
**dass** es sich bei dem Bauteil um ein ungelochtes Bauteil (13') handelt und dass das das Befestigungselement (12') aufnehmende Werkzeug bzw. das zweite Werkzeug (70'; 40') einen konzentrisch zum Befestigungselement angeordneten Stift (90) aufweist, der durch die Bohrung (92) des Befestigungselements hindurchragt und dessen freie Stirnseite (94) mit dem hohlen, die Matrizenform auf weisenden ersten Werkzeug (26"'; 26""; 26""') zusammenarbeitet, um einen Butzen (96) aus dem Bauteil (13') herauszuschneiden, der durch die mittlere Bohrung (93) des die Matrizenform aufweisenden Werkzeugs (26"'; 26""; 26""') entsorgt wird.

38. Verfahren nach einem der vorhergehenden Ansprüche,
**dadurch gekennzeichnet,**
**dass** das Befestigungselement (12; 12') Verdrehsicherungsmerkmale (84) im Bereich der Auflagefläche und/oder des Übergangs von der Auflagefläche in einen etwaigen Schaftteil und/oder im Bereich einer hohlförmigen Vertiefung (80) des Befestigungselements aufweist, wobei das Material des Bauteils durch die Wirkung der lokalen Kraft (K) und der Zustellbewegung auch in Eingriff mit den Verdrehsicherungsmerkmalen gebracht wird, die gegebenenfalls durch die mindestens eine Hinterschneidung (24; 82) oder durch Vertiefungen (84) in der Anlagefläche (22) realisiert werden können.

39. Ein System, das eine Vorrichtung zur Anbringung eines Befestigungselementes (12; 12') an ein Bauteil, beispielsweise an ein Blechteil (13; 13'), ein Bauteil sowie ein Befestigungselement umfasst, wobei das Befestigungselement eine Symmetrieachse (18), einen Kopfteil (14) mit einer Anlagefläche (22), die in Berührung mit dem Bauteil (13) gelangt, einen ein Gewinde (15; 15') aufweisenden Befestigungsabschnitt sowie mindestens eine das Material des Bauteils aufnehmende Hinterschneidung (24; 82) aufweist, wobei das Material des Bauteils an die Anlagefläche und in die Hinterschneidung mittels eines ersten zur Ausbildung des Befestigungselements passende Matrizenform aufweisenden Werkzeugs (26; 26'; 26"; 26"'; 26""; 26""') drückbar ist,
**dadurch gekennzeichnet, dass** die Vorrichtung eine Kraft erzeugende Einrichtung aufweist, die ausgelegt ist um eine lokale Kraft (K) auf den Kopfteil (14) des Befestigungselements (12; 12') oder auf das Werkzeug (26; 26'; 26"; 26"'; 26""; 26""') seitlich der Symmetrieachse (18) zu üben und diese lokale Kraft kreisförmig um die Symmetrieachse herum bei gleichzeitiger Durchführung einer relativen Zustellbewegung zwischen dem Werkzeug (26; 26'; 26"; 26"'; 26""; 26""') und dem Befestigungselement (12; 12'), zwischen denen das Bauteil (13; 13') angeordnet ist, zu bewegen, um das Material des Bauteils an die Anlagefläche und in die Hinterschneidung (24; 82) zu drücken.

40. System nach Anspruch 39,
**dadurch gekennzeichnet,**
**dass** es sich bei dem Befestigungselement um ein Bolzenelement (12) handelt, wobei das Gewinde (15) an einem Schaftteil (16) des Befestigungselements ausgebildet ist, und dass der Schaftteil (16) vor dem Ausüben der lokalen Kraft (K) zur Bewegung des Materials des Bauteils in die Hinterschneidung (24) durch ein vorgeformtes Loch im Bauteil, d.h. durch ein vorgeformtes Loch im Bauteil (13), d.h. durch ein vorgelochtes Bauteil führbar ist.

41. System nach Anspruch 40,
**dadurch gekennzeichnet,**
**dass** das die Matrizenform aufweisende Werkzeug eine Matrize (26) ist und dass die lokale Kraft (K) auf den Kopfteil (14) des Befestigungselements mit einem zweiten Werkzeug (40) ausübbar ist, das in einer bezogen auf die Symmetrieachse (18) geneigten Stellung (42) angeordnet ist und um die Symmetrieachse drehbar ist.

42. System nach Anspruch 41,
**dadurch gekennzeichnet,**
**dass** das zweite Werkzeug (40) eine dem Kopfteil des Befestigungselements zugewandte konusförmige Stirnseite (44) aufweist.

43. System nach Anspruch 42,
**dadurch gekennzeichnet,**
**dass** das zweite Werkzeug (40) direkt auf dem Kopfteil (14) des Befestigungselements (12) arbeitet.

44. System nach einem der Ansprüche 40 bis 43,
**dadurch gekennzeichnet,**
**dass** das zweite Werkzeug (40) über ein zylindrisches Zwischenstück (50) auf dem Kopfteil (14) des Befestigungselements (12) arbeitet.

45. System nach Anspruch 44,
**dadurch gekennzeichnet,**
**dass** das zylindrische Zwischenstück (50) und ein dem zylindrischen Zwischenstück zugewandter vorderer Abschnitt (52) des zweiten Werkzeugs (40) von einem rohrförmigen Führungsteil (54) mit etwas radialem Spiel führbar ist.

46. System nach einem der vorhergehenden Ansprüche 39 bis 45,
**dadurch gekennzeichnet,**
**dass** die dem Kopfteil (14) des Befestigungselements zugewandte Stirnseite (44) des zweiten Werkzeugs (40) eine zumindest im Wesentlichen linienförmige Berührung (56) mit dem Kopfteil (14) bzw. mit dem Zwischenstück (50) aufweist.

47. System nach einem der vorhergehenden Ansprüche 39 bis 46,
**dadurch gekennzeichnet,**
**dass** das zweite Werkzeug (40) oder das zylindrische Zwischenstück (50) auf einer Ringfläche (57) des Kopfteils (14) des Befestigungselements (12) arbeitet.

48. System nach Anspruch 39,
**dadurch gekennzeichnet,**
**dass** der Kopfteil (14) des Befestigungselements (12) in eine Ausnehmung (60) eines zweiten Werkzeugs (62) aufnehmbar ist, dessen Stirnseite (64) das Bauteil (13) zumindest im Wesentlichen in der Höhe der Anlagefläche (22) abstützt, und dass die lokale Kraft (K) auf das Bauteil (13) mit dem ersten Werkzeug (26') ausübbar ist, das in einer bezogen auf die Symmetrieachse (18) geneigten Stellung (42, 42') angeordnet ist und um die Symmetrieachse drehbar ist.

49. System nach Anspruch 48,
**dadurch gekennzeichnet,**
**dass** das erste Werkzeug (26'; 26") direkt auf dem Bauteil (13) im Bereich des Befestigungselements (12) arbeitet.

50. System nach Anspruch 48,
**dadurch gekennzeichnet,**
**dass** das erste Werkzeug als zylindrisches Zwischenstück (26") ausgebildet ist, das auf dem Bauteil (13) im Bereich des Befestigungselements (12) arbeitet, und dass ein weiteres Werkzeug (40) die lokale Kraft auf das erste Werkzeug (26") ausübt.

51. System nach Anspruch 44,
**dadurch gekennzeichnet,**
**dass** das erste Werkzeug (26) und ein dem zylindrischen Zwischenstück (50) zugewandter vorderer Abschnitt (72) des dritten Werkzeugs (40) von einem rohrförmigen Führungsteil (54) mit etwas radialem Spiel führbar ist.

52. System nach einem der vorhergehenden Ansprüche 39 bis 51,
**dadurch gekennzeichnet,**
**dass** die dem Bauteil zugewandte Stirnseite des ersten Werkzeugs (40) eine zumindest im Wesentlichen linienförmige Berührung mit dem Bauteil (14) aufweist.

53. System nach Anspruch 50 oder 51,
**dadurch gekennzeichnet,**
**dass** das weitere Werkzeug (40) eine dem Kopfteil (14) des Befestigungselements (12) zugewandte konusförmige Stirnseite (74) aufweist.

54. System nach einem der vorhergehenden Ansprüche 39 bis 53,
**dadurch gekennzeichnet,**
**dass** das Befestigungselement (12') eine axiale Ringnut (34) oder konkave Felder in der Anlagefläche sowie eine radiale Hinterschneidung (24) aufweist, die durch das Gewinde (15) im Bereich des Kopfteils (14) ausgebildet sein kann, das das Bauteil ein Loch mit einem das loch umgebenden Kragen aufweist und dass das Befestigungselement (12) durch den das Loch umgebenden Ringkragen (35) von der dem Ringkragen (35) abgewandten Seite des Bauteils (13) hindurch führbar ist.

55. System nach Anspruch 54,
**dadurch gekennzeichnet,**
**dass** das eine Matrizenform aufweisende erste Werkzeug (26) einen mittleren Ringvorsprung (36) mit einer zumindest im Wesentlichen konusförmigen Innenfläche (38) aufweist, die das Material des Ringkragens (35) radial nach innen in die Hinterschneidung (24) drückt.

56. System nach Anspruch 39,
**dadurch gekennzeichnet,**
**dass** es sich bei dem Befestigungselement um ein Mutterelement (12') handelt, wobei das Gewinde als Gewindebohrung (15') des Befestigungselements ausgebildet ist und gegebenenfalls im Kopfteil (14) angeordnet ist.

57. System nach Anspruch 56,
**dadurch gekennzeichnet,**
**dass** das die Matrizenform aufweisende erste Werkzeug eine Matrize (26"') ist und dass zum Ausüben der lokalen Kraft (K) auf den Kopfteil (14) des Befestigungselements (12') ein zweites Werkzeug (40') vorgesehen ist, das in einer bezogen auf die Symmetrieachse (18) geneigten Stellung (42, 42') angeordnet ist und um die Symmetrieachse drehbar ist.

58. System nach Anspruch 57,
**dadurch gekennzeichnet,**
**dass** das zweite Werkzeug (40') eine dem Kopfteil (14) des Befestigungselements (13') zugewandte konusförmige Stirnseite (98) auf weist.

59. System nach Anspruch 57 oder 58,
**dadurch gekennzeichnet,**
**dass** das zweite Werkzeug (40') direkt auf dem Kopfteil (14) des Befestigungselements (12') arbeitet.

60. System nach einem der Ansprüche 56 bis 58,
**dadurch gekennzeichnet,**
**dass** das zweite Werkzeug (70') über ein zylindrisches Zwischenstück (50) auf dem Kopfteil (14) des Befestigungselements (12') arbeitet.

61. System nach Anspruch 60,
**dadurch gekennzeichnet,**
**dass** das zylindrische Zwischenstück (50) und ein dem zylindrischen Zwischenstück zugewandter vorderen Abschnitt (72) des zweiten Werkzeugs von einem rohrförmigen Führungsteil (54) mit etwas radialem Spiel führbar sind.

62. System nach einem der vorhergehenden Ansprüche 56 bis 61,
**dadurch gekennzeichnet,**
**dass** die dem Kopfteil (14) des Befestigungselements (12') zugewandte Stirnseite (98; 74) des zweiten Werkzeugs (40'; 70') eine zumindest im Wesentlichen linienförmige Berührung (97; 76) mit dem Kopfteil (14) oder mit dem zylindrischen Zwischenstück (50) aufweist.

63. System nach einem der vorhergehenden Anspruche 56 bis 62,
**dadurch gekennzeichnet,**
**dass** das zweite Werkzeug (40') oder das zylindrische Zwischenstück (50) auf einer Ringfläche (14') des Kopfteils (14) des Befestigungselements (12') arbeitet.

64. System nach Anspruch 56,
**dadurch gekennzeichnet,**
**dass** der Kopfteil (14) des Befestigungselements (12') in eine Ausnehmung (60') eines zweiten Werkzeugs (62') aufnehmbar ist, dessen Stirnseite (64') das Bauteil (13') zumindest im Wesentlichen in der Höhe der Anlagefläche (22) abstützt, und dass die lokale Kraft (K) auf das Bauteil (13') mit dem ersten Werkzeug (26"") ausübbar ist, das in einer bezogen auf die Symmetrieachse (18) geneigten Stellung (42, 42') angeordnet und um die Symmetrieachse drehbar ist.

65. System nach Anspruch 64,
**dadurch gekennzeichnet,**
**dass** das erste Werkzeug (26""') direkt auf dem Bauteil (13') im Bereich des Befestigungselements (12') arbeitet.

66. System nach Anspruch 64,
**dadurch gekennzeichnet,**
**dass** das erste Werkzeug (26""') als zylindrisches Zwischenstück ausgebildet ist, das auf dem Bauteil (13') im Bereich des Befestigungselements (12') arbeitet, und dass ein drittes Werkzeug (70') die lokale Kraft (K) auf das erste Werkzeug (26""') ausübt.

67. System nach Anspruch 66,
**dadurch gekennzeichnet,**
**dass** das erste Werkzeug (26""') und ein dem zylindrischen Zwischenstück (76') zugewandter vorderen Abschnitt (72') des dritten Werkzeugs (70') von einem rohrförmigen Führungsteil (54') mit etwas radialem Spiel führbar sind.

68. System nach einem der vorhergehenden Ansprüche 39 bis 67,
**dadurch gekennzeichnet,**
**dass** die dem Bauteil (13') zugewandte Stirnseite des ersten Werkzeugs (26"") eine zumindest im Wesentlichen linienförmige Berührung mit dem Bauteil aufweist.

69. System nach Anspruch 66 oder 67,
**dadurch gekennzeichnet,**
**dass** das dritte Werkzeug (70') eine dem Kopfteil (14) des Befestigungselements (12') zugewandte konusförmige Stirnseite aufweist.

70. System nach einem der vorhergehenden Ansprüche 39 bis 69,
**dadurch gekennzeichnet,**
**dass** das Befestigungselement (12') im Kopfteil (14) radial innerhalb einer zumindest im Wesentlichen ringförmigen Anlagefläche (22) eine Ausnehmung (80) mit mindestens einer radialen Hinterschneidung (2), beispielsweise eine ringförmige Hinterschneidung (82) oder diskreten, stellenweise an einer Wandung der Ausnehmung ausgebildeten Hinterschneidungen (82), denen gegebenenfalls entsprechende, stellenweise in der ringförmigen Anlagefläche vorgesehene Vertiefungen (84) zugeordnet sind, aufweist, und dass durch die Wirkung des ersten die Matrizenform aufweisenden Werkzeugs (26"'; 26""; 26""') Material des Bauteils in die Hinterschneidung(en) (82) drückbar ist.

71. System nach Anspruch 70,
**dadurch gekennzeichnet,**
**dass** es sich bei dem Bauteil um ein vorgelochtes Blechteil (13') handelt und dass das erste die Matrizenform aufweisende Werkzeug (26"'; 26""; 26""') ausgelegt ist, um das Material um den durch das Vorlochen erzeugten Rand des Loches des Blechteils auch in die Ausnehmung hineinzudrücken.

72. System nach Anspruch 70,
**dadurch gekennzeichnet,**
**dass** es sich bei dem Bauteil um ein vorgelochtes Blechteil (13') handelt mit einem das durch das Vorlochen erzeugte Loch umgebenden Ringkragen, der in die Ausnehmung (80) einführbar ist, und dass das erste die Matrizenform aufweisende Werkzeug (26"'; 26""; 26""') ausgelegt ist, um das Material des Blechteils (13') im Bereich des Ringkragens in die Hinterschneidung(en) (82) hineinzudrücken.

73. * System nach Anspruch 70,
**dadurch gekennzeichnet,**
**dass** das die Matrizenform (26"'; 26""; 26""') aufweisende Werkzeug ausgelegt ist, um das Material des Blechteils (13') auch in die stellenweise in der ringförmigen Anlagefläche (22) vorgesehenen Vertiefungen (84) hineinzudrücken.

74. System nach einem der Ansprüche 39 bis 73,
**dadurch gekennzeichnet,**
**dass** das eine Matrizenform aufweisende erste Werkzeug (26"'; 26""; 26""') einen mittleren rohrförmigen, gegebenenfalls leicht konusförmig ausgebildeten Vorsprung (86) aufweist, der ausgelegt ist, um das Material des Bauteils radial nach außen in die Hinterschneidung(en) (82) und ggf. in die Ausnehmung (60) zu drücken.

75. System nach einem der Ansprüche 39 bis 70,
**dadurch gekennzeichnet,**
**dass** es sich bei dem Bauteil um ein ungelochtes Bauteil (13') handelt und dass das das Befestigungselement (12') aufnehmende Werkzeug, bzw. das zweite Werkzeug (70'; 40'), einen konzentrisch zum Befestigungselement angeordneten Stift (90) aufweist, der durch die Bohrung (92) des Befestigungselements hindurchragt und dessen freie Stirnseite (94) mit dem hohlen die Matrizenform aufweisenden ersten Werkzeug (26"'; 26""; 26""') zusammenarbeitet, um einen Butzen (96) aus dem Bauteil (13') herauszuschneiden, und dass die mittlere Bohrung (93) des die Matrizenform aufweisenden Werkzeugs (26"'; 26""; 26""') ausgelegt ist, um den Bützen zu entsorgen.

76. System nach einem der vorhergehenden Ansprüche 39 bis 75,
**dadurch gekennzeichnet,**
**dass** das Befestigungselement (12; 12') Verdrehsicherungsmerkmale (84) im Bereich der Auflagefläche und/oder des Übergangs von der Auflagefläche in einen etwaigen Schaftteil und/oder im Bereich einer hohlförmigen Vertiefung (80) des Befestigungselements aufweist, wobei das Material des Bauteils durch die Wirkung der lokalen Kraft (K) und der Zustellbewegung auch in Eingriff mit den Verdrehsicherungsmerkmalen bringbar ist, die gegebenenfalls durch die mindestens eine Hinterschneidung (24; 82) oder durch Vertiefungen (84) in der Anlagefläche (22) realisierbar ist.

77. System nach einem der Ansprüche 39 bis 76,
**dadurch gekennzeichnet,**
**dass** es in einer Art Säulenbohrmaschine eingebaut ist, um die relativen Bewegungen zu erreichen.

## Claims

1. A method for the attachment of a fastener element (12; 12') to a component, for example a sheet metal part (13; 13'), wherein the fastener element has an axis of symmetry (18), a head part (14) having a contact surface (22) which enters into contact with the component (13), a fastening section having a thread (15; 15') and also at least one undercut (24; 82) which receives the material of the component, and wherein the material of the component is pressed against the contact surface and into the undercut by means of a first tool (26; 26'; 26"; 26'"; 26""; 26""') having a die button shape matching the design of the fastener element,
**characterized in that**
a local force (K) is exerted on the head part (14) of the fastener element (12; 12') or onto the tool (26; 26'; 26"; 26"'; 26""; 26""') to the side of the axis of symmetry (18) and is moved circularly around the axis of symmetry while simultaneously carrying out a relative feed movement between the tool (26; 26'; 26"; 26"'; 26""; 26""') and the fastener element (12; 12') between which the component (13; 13') is arranged in order to press the material of the component into the undercut (24; 82).

2. A method in accordance with claim 1,
**characterized in that**
the fastener element is a bolt element (12), with the thread (15) being formed at a shaft part (16) of the fastener element and **in that** the shaft part (16) is guided through a pre-formed hole in the component, i.e. through a pre-holed component (13) prior to exerting the local force (K) for the movement of the material of the component into the undercut (24).

3. A method in accordance with claim 2,
**characterized in that**
the tool having the die button shape is a die button (26) and **in that** the local force (K) is exerted onto the head part (14) of the fastener element with a second tool (40) which is arranged in an inclined position (42) relative to the axis of symmetry (18) and is rotated around the axis of symmetry.

4. A method in accordance with claim 3,
**characterized in that**
the second tool (40) has a conical end face (44) facing the head part of the fastener element.

5. A method in accordance with claim 4,
**characterized in that**
the second tool (40) works directly on the head part (14) of the fastener element (12) .

6. A method in accordance with one of the claims 2 to 4,
**characterized in that**
the second tool (40) works on the head part (14) of the fastener element (12) via a cylindrical intermediate piece (50).

7. A method in accordance with claim 6,
**characterized in that**
the cylindrical intermediate piece (50) and a front section (52) of the second tool (40) facing the cylindrical intermediate piece are guided by a tubular guide part (54) with some radial clearance.

8. A method in accordance with one of the preceding claims,
**characterized in that**
the end face (44) of the second tool (40) facing the head part (14) of the fastener element has a substantially linear contact (56) with the head part (14) or with the intermediate piece (50).

9. A method in accordance with one of the preceding claims 2 to 8,
**characterized in that**
the second tool (40) or the cylindrical intermediate piece (50) operates on a ring surface (57) of the head part (14) of the fastener element (12).

10. A method in accordance with claim 2,
**characterized in that**
the head part (14) of the fastener element (12) is received in a cut-out (60) of a second tool (62) the end face (64) of which supports the component (13) at least substantially at the level of the contact surface (22) and **in that** the local force (K) is exerted onto the component (13) with the first tool (26') which is disposed at an inclined position (42, 42') relative to the axis of symmetry (18) and is rotated about the axis of symmetry.

11. A method in accordance with claim 10,
**characterized in that**
the first tool (26'; 26") works directly on the component (13) in the region of the fastener element (12).

12. A method in accordance with claim 10,
**characterized in that**
the first tool is formed as a cylindrical intermediate piece (26") which works on the component (13) in the region of the fastener element (12) and **in that** a further tool (40) exerts the local force onto the first tool (26").

13. A method in accordance with claim 6,
**characterized in that**
the first tool (26) and a front section (72) of the third tool facing the cylindrical intermediate piece (50) forming the first tool (26) are guided with some radial clearance by a tubular guide part (54).

14. A method in accordance with one of the preceding claims 2 to 13,
**characterized in that**
the end face of the first tool (50) facing the component has a substantially linear contact with the component (14).

15. A method in accordance with claim 12 or claim 13,
**characterized in that**
the further tool (40) has a conical end face (74) facing the head part (14) of the fastener element (12).

16. A method in accordance with one of the preceding claims 2 to 15,
**characterized in that**
the fastener element (12) has an axial ring groove (34) or concave fields in the contact surface and also a radial undercut (24) which can be formed by the thread (15) in the region of the head part (14) and **in that** the fastener element (12) is passed through a ring collar (35) surrounding the hole of the pre-holed component from the side of the component (13) remote from the ring collar (35).

17. A method in accordance with claim 16,
**characterized in that**
the first tool (26) having a die button shape has a central ring projection (36) with an at least substantially conical inner surface (38) which presses the material of the ring collar (38) radially inwardly into the undercut (24).

18. A method in accordance with claim 1,
**characterized in that**
the fastener element is a nut element (12'), with the thread being designed as a threaded bore (15') of the fastener element and optionally being able to be arranged in the head part (14) and with the A method being carried out with a holed or non-holed component (13').

19. A method in accordance with claim 18,
**characterized in that**
the first tool having the die button shape is a die button (26"') and **in that** the local force (K) is exerted onto the head part (14) of the fastener element (12') with a second tool (40') which is disposed in an inclined position (42, 42') relative to the axis of symmetry (18) and rotated about the axis of symmetry.

20. A method in accordance with claim 19,
**characterized in that**
the second tool (40') has a conical end face (98) facing the head part (14) of the fastener element (13').

21. A method in accordance with claim 19 or 20,
**characterized in that**
the second tool (40') operates directly on the head part (14) of the fastener element (12').

22. A method in accordance with one of the claims 18 to 20,
**characterized in that**
the second tool (70') operates via a cylindrical intermediate piece (50) on the head part (14) of the fastener element (12').

23. A method in accordance with claim 22,
**characterized in that**
the cylindrical intermediate piece (50) and a front section (72) of the second tool facing the cylindrical intermediate piece are guided by a tubular guide part (54) with some radial clearance.

24. A method in accordance with one of the preceding claims 18 to 23,
**characterized in that**
the end face (98; 74) of the second tool (40'; 70') facing the head part (14) of the fastener element (12') has a substantially linear contact (97; 76) with the head part (14) or with the cylindrical intermediate piece (50).

25. A method in accordance with one of the preceding claims 18 to 24,
**characterized in that**
the second tool (40') or the cylindrical intermediate piece (50) operates on a ring surface (14') of the head part (14) of the fastener element (12') .

26. A method in accordance with claim 18,
**characterized in that**
the head part (14) of the fastener element (12') is received in a cut-out (60') of a second tool (62') the end face (64') of which supports the component (13') at least substantially at the level of the contact surface (22) and **in that** the local force (K) is exerted onto the component (13') with the first tool (26"") which is arranged in an inclined position (42, 42) related to the axis of symmetry (18) and is rotated about the axis of symmetry.

27. A method in accordance with claim 26,
**characterized in that**
the first tool (26"") operates directly on the component (13') in the region of the fastener element (12').

28. A method in accordance with claim 26,
**characterized in that**
the first tool (26""') is formed as a cylindrical intermediate piece which operates on the component (13') in the region of the fastener element (12') and **in that** a third tool (70') exerts the local force (K) on the first tool (26""').

29. A method in accordance with claim 28,
**characterized in that**
the first tool (26""') and a front section (72') of the third tool (70') facing the cylindrical intermediate piece (76') are guided by a tubular guide part (54') with some radial clearance.

30. A method in accordance with one of the preceding claims 18 to 29,
**characterized in that**
the end face of the first tool (26"") facing the component (13') has an at least substantially linear contact with the component.

31. A method in accordance with claim 28 or 29,
**characterized in that**
the third tool (70') has a conical end face facing the head part (14) of the fastener element (12').

32. A method in accordance with one of the preceding claims 18 to 31,
**characterized in that**
the fastener element (12') has a cut-out (80) with at least one radial undercut (82) radially inside an at least substantially ring-like contact surface (22), for example a ring-like undercut (82) or discrete undercuts (82) formed locally at a wall of the recess with which corresponding recesses (84) provided locally in the ring-like contact surface are optionally associated and **in that** by the action of the first tool (26"'; 26""; 26""') having the die button shape material of the component is pressed into the undercut(s) (82).

33. A method in accordance with claim 32,
**characterized in that**
the component is a pre-holed sheet metal part (13') and **in that** the first tool (26"; 26""; 26""") having the die button shape presses the material of the sheet metal part around the rim of the sheet metal part produced by the pre-holing and also into the recess.

34. A method in accordance with claim 32,
**characterized in that**
the component is a pre-holed component (13') with a ring collar surrounding the hole produced by the pre-holing which is introduced into the cut-out (80) and **in that** the first tool (26"'; 26""; 26""') having the die button shape presses the material of the sheet metal part (13') in the region of the ring collar into the undercut(s) (82).

35. A method in accordance with claim 32,
**characterized in that**
the tool having the die button shape '(26"'; 26""; 26""') also presses the material of the sheet metal part (13') into the recesses (84) provided locally in the ring-like contact surface (22).

36. A method in accordance with one of the claims 18 to 35,
**characterized in that**
the first tool (26"'; 26""; 26""') having a die button shape has a central tubular projection (86) which is optionally slightly conically shaped which presses the material of the component radially outwardly into the undercut(s) (82) and optionally into the cut-out (80).

37. A method in accordance with one of the claims 18 to 32,
**characterized in that**
the component is a non-holed component (13') and that the tool which receives the fastener element (12'), or the second tool (70'; 40'), has a pin (90) arranged concentric to the fastener element which projects through the bore (92) of the fastener element and the free end face (94) of which cooperates with the hollow first tool (26"'; 26""; 26""') having the die button shape in order to cut a slug (96) out of the component (13') which is disposed of through the central bore (93) of the tool (26"'; 26""; 26""') having the die button shape.

38. A method in accordance with one of the preceding claims,
**characterized in that**
the fastener element (12; 12') has features (84) providing security against rotation in the region of the contact surface and/or of the transition from the contact surface into any shaft part that is present and/or in the region of a hollow recess (80) of the fastener element, wherein the material of the component is also brought by the action of the local force (K) and the feed movement into engagement with the features providing security against rotation which can optionally be realized by the at least one undercut (24; 82) or by recesses (84) in the contact surface (22).

39. A system comprising an apparatus for the attachment of a fastener element (12; 12') to a component, for example to a sheet metal part (13; 13'), a component as well as a fastener element, wherein the fastener element has an axis of symmetry (18), a head part (14) having a contact surface (22) which enters into contact with the component (13), a fastening section having a thread (15; 15') and also at least one undercut (24; 82) which receives the material of the component, wherein the material of the component can be pressed against the contact surface and into the undercut by means of a first tool (26; 26'; 26"; 26"'; 26""; 26""') having a die button shape matching the design of the fastener element,
**characterized in that**
the apparatus has a device generating a force which is configured to exert a local force (K) on the head part (14) of the fastener element (12; 12') or onto the tool (26; 26'; 26"; 26"'; 26""; 26""') to the side of the axis of symmetry (18) and to move this local force circularly around the axis of symmetry while simultaneously carrying out a relative feed movement between the tool (26; 26'; 26"; 26"'; 26""; 26""') and the fastener element (12; 12') between which the component (13; 13') is arranged in order to press the material of the component onto the contact surface and into the undercut (24; 82).

40. A system in accordance with claim 39,
**characterized in that**
the fastener element is a bolt element (12), with the thread (15) being formed at a shaft part (16) of the fastener element and **in that** the shaft part (16) can be guided through a pre-formed hole in the component, i.e. through a pre-formed hole in the component, i.e. through a pre-holed component (13) prior to exerting the local force (K) for the movement of the material of the component into the undercut (24).

41. A system in accordance with claim 40,
**characterized in that**
the tool having the die button shape is a die button (26) and **in that** the local force (K) can be exerted onto the head part (14) of the fastener element with a second tool (40) which is arranged in an inclined position (42) relative to the axis of symmetry (18) and can be rotated around the axis of symmetry.

42. A system in accordance with claim 41,
**characterized in that**
the second tool (40) has a conical end face (44) facing the head part of the fastener element.

43. A system in accordance with claim 42,
**characterized in that**
the second tool (40) works directly on the head part (14) of the fastener element (12).

44. A system in accordance with one of the claims 40 to 43,
**characterized in that**
the second tool (40) works on the head part (14) of the fastener element (12) via a cylindrical intermediate piece (50).

45. A system in accordance with claim 44,
**characterized in that**
the cylindrical intermediate piece (50) and a front section (52) of the second tool (40) facing the cylindrical intermediate piece can be guided by a tubular guide part (54) with some radial clearance.

46. A system in accordance with one of the preceding claims 39 to 45,
**characterized in that**
the end face (44) of the second tool (40) facing the head part (14) of the fastener element has a substantially linear contact (56) with the head part (14) or with the intermediate piece (50).

47. A system in accordance with one of the preceding claims 39 to 46,
**characterized in that**
the second tool (40) or the cylindrical intermediate piece (50) operates on a ring surface (57) of the head part (14) of the fastener element (12).

48. A system in accordance with claim 39,
**characterized in that**
the head part (14) of the fastener element (12) can be received in a cut-out (60) of a second tool (62) the end face (64) of which supports the component (13) at least substantially at the level of the contact surface (22) and **in that** the local force (K) can be exerted onto the component (13) with the first tool (26') which is disposed at an inclined position (42, 42') relative to the axis of symmetry (18) and can be rotated about the axis of symmetry.

49. A system in accordance with claim 48,
**characterized in that**
the first tool (26'; 26") works directly on the component (13) in the region of the fastener element (12).

50. A system in accordance with claim 48,
**characterized in that**
the first tool is formed as a cylindrical intermediate piece (26") which works on the component (13) in the region of the fastener element (12) and **in that** a further tool (40) exerts the local force onto the first tool (26").

51. A system in accordance with claim 44,
**characterized in that**
the first tool (26) and a front section (72) of the third tool facing the cylindrical intermediate piece (50) forming the first tool (26) can be guided with some radial clearance by a tubular guide part (54).

52. A system in accordance with one of the preceding claims 39 to 51,
**characterized in that**
the end face of the first tool (50) facing the component has a substantially linear contact with the component (14).

53. A system in accordance with claim 50 or claim 51,
**characterized in that**
the further tool (40) has a conical end face (74) facing the head part (14) of the fastener element (12).

54. A system in accordance with one of the preceding claims 39 to 53,
**characterized in that**
the fastener element (12') has an axial ring groove (34) or concave fields in the contact surface and also a radial undercut (24) which can be formed by the thread (15) in the region of the head part (14); **in that** the component has a hole with a collar surrounding the hole; and **in that** the fastener element (12) can be passed through the ring collar (35) surrounding the hole from the side of the component (13) remote from the ring collar (35).

55. A system in accordance with claim 54,
**characterized in that**
the first tool (26) having a die button shape has a central ring projection (36) with an at least substantially conical inner surface (38) which presses the material of the ring collar (38) radially inwardly into the undercut (24).

56. A system in accordance with claim 39,
**characterized in that**
the fastener element is a nut element (12'), with the thread being designed as a threaded bore (15') of the fastener element and optionally being arranged in the head part (14).

57. A system in accordance with claim 56,
**characterized in that**
the first tool having the die button shape is a die button (26"') and **in that** a second tool (40') is provided to exert the local force (K) onto the head part (14) of the fastener element (12') and is disposed in an inclined position (42, 42') relative to the axis of symmetry (18) and can be rotated about the axis of symmetry.

58. A system in accordance with claim 57,
**characterized in that**
the second tool (40') has a conical end face (98) facing the head part (14) of the fastener element (13').

59. A system in accordance with claim 57 or 58,
**characterized in that**
the second tool (40') operates directly on the head part (14) of the fastener element (12').

60. A system in accordance with one of the claims 56 to 58,
**characterized in that**
the second tool (70') operates via a cylindrical intermediate piece (50) on the head part (14) of the fastener element (12').

61. A system in accordance with claim 60,
**characterized in that**
the cylindrical intermediate piece (50) and a front section (72) of the second tool facing the cylindrical intermediate piece can be guided by a tubular guide part (54) with some radial clearance.

62. A system in accordance with one of the preceding claims 56 to 61,
**characterized in that**
the end face (98; 74) of the second tool (40'; 70') facing the head part (14) of the fastener element (12') has an at least substantially linear contact (97; 76) with the head part (14) or with the cylindrical intermediate piece (50).

63. A system in accordance with one of the preceding claims 56 to 62,
**characterized in that**
the second tool (40') or the cylindrical intermediate piece (50) operates on a ring surface (14') of the head part (14) of the fastener element (12').

64. A system in accordance with claim 56,
**characterized in that**
the head part (14) of the fastener element (12') can be received in a cut-out (60') of a second tool (62') the end face (64') of which supports the component (13') at least substantially at the level of the contact surface (22) and **in that** the local force (K) can be exerted onto the component (13') with the first tool (26"") which is arranged in an inclined position (42, 42') related to the axis of symmetry (18) and can be rotated about the axis of symmetry.

65. A system in accordance with claim 64,
**characterized in that**
the first tool (26""') operates directly on the component (13') in the region of the fastener element (12').

66. A system in accordance with claim 64,
**characterized in that**
the first tool (26""') is formed as a cylindrical intermediate piece which operates on the component (13') in the region of the fastener element (12') and **in that** a third tool (70') exerts the local force (K) on the first tool (26""').

67. A system in accordance with claim 66,
**characterized in that**
the first tool (26""') and a front section (72') of the third tool (70') facing the cylindrical intermediate piece (76') can be guided by a tubular guide part (54') with some radial clearance.

68. A system in accordance with one of the preceding claims 39 to 67,
**characterized in that**
the end face of the first tool (26"") facing the component (13') has an at least substantially linear contact with the component.

69. A system in accordance with claim 66 or 67,
**characterized in that**
the third tool (70') has a conical end face facing the head part (14) of the fastener element (12').

70. A system in accordance with one of the preceding claims 39 to 69,
**characterized in that**
the fastener element (12') has a cut-out (80) with at least one radial undercut (2) radially inside a substantially ring-like contact surface (22), for example a ring-like undercut (82) or discrete undercuts (82) formed locally at a wall of the recess, with which corresponding recesses (84) provided locally in the ring-like contact surface are optionally associated and **in that** by the action of the first tool (26"; 26""; 26""') having the die button shape material of the component can be pressed into the undercut(s) (82).

71. A system in accordance with claim 70,
**characterized in that**
the component is a pre-holed sheet metal part (13') and **in that** the first tool (26"'; 26""; 26""") having the die button shape is configured to press the material of the sheet metal part around the rim of the hole of the sheet metal part produced by the pre-holing and also into the recess.

72. A system in accordance with claim 70,
**characterized in that**
the component is a pre-holed component (13') with a ring collar surrounding the hole produced by the pre-holing which can be introduced into the cut-out (80) and **in that** the first tool (26"'; 26""; 26""') having the die button shape is configured to press the material of the sheet metal part (13') in the region of the ring collar into the undercut(s) (82).

73. A system in accordance with claim 70,
**characterized in that**
the tool having the die button shape (26"'; 26""; 26""') is also configured to press the material of the sheet metal part (13') into the recesses (84) provided locally in the ring-like contact surface (22).

74. A system in accordance with one of the claims 39 to 73,
**characterized in that**
the first tool (26"'; 26""; 26""') having a die button shape has a central tubular projection (86) which is optionally slightly conically shaped which is configured to press the material of the component radially outwardly into the undercut(s) (82) and optionally into the cut-out (80).

75. A system in accordance with one of the claims 39 to 70,
**characterized in that**
the component is a non-holed component (13') and that the tool which receives the fastener element (12'), or the second tool (70'; 40'), has a pin (90) arranged concentric to the fastener element which projects through the bore (92) of the fastener element and the free end face (94) of which cooperates with the hollow first tool (26"'; 26""; 26""') having the die button shape in order to cut a slug (96) out of the component (13'); and **in that** the central bore (93) of the tool (26"'; 26""; 26""') having the die button shape is configured to dispose of the slug.

76. A system in accordance with one of the preceding claims 39 to 75,
**characterized in that**
the fastener element (12; 12') has features (84) providing security against rotation in the region of the contact surface and/or of the transition from the contact surface into any shaft part that is present and/or in the region of a hollow recess (80) of the fastener element, wherein the material of the component can also be brought by the action of the local force (K) and the feed movement into engagement with the features providing security against rotation which can optionally be realized by the at least one undercut (24; 82) or by recesses (84) in the contact surface (22).

77. A system in accordance with one of the claims 39 to 76,
**characterized in that**
it is incorporated into a type of pillar drill in order to achieve the relative movements.

## Revendications

1. Procédé de montage d'un élément de fixation (12 ; 12') sur un composant, par exemple sur une pièce en tôle (13 ; 13'), l'élément de fixation présentant un axe de symétrie (18), une partie tête (14) munie d'une surface d'appui (22) venant en contact avec le composant (13), une portion de fixation présentant un pas de vis (15 ; 15'), ainsi qu'au moins une contre-dépouille (24 ; 82) recevant le matériau du composant, et le matériau du composant étant pressé contre la surface d'appui et jusque dans la contre-dépouille au moyen d'un premier outil (26 ; 26' ; 26", 26"', 26"", 26""') qui présente une forme de matrice adaptée à la réalisation de l'élément de fixation,
**caractérisé en ce que**
une force locale (K) est exercée sur la partie tête (14) de l'élément de fixation (12 ; 12') ou sur l'outil (26 ; 26' ; 26", 26"', 26"", 26""') latéralement à côté de l'axe de symétrie (18) et elle est déplacée en forme circulaire autour de l'axe de symétrie, en exécutant simultanément un mouvement d'approche relatif entre l'outil (26 ; 26' ; 26", 26"', 26"", 26""') et l'élément de fixation (12 ; 12') entre lesquels est agencé le composant (13 ; 13'), afin de presser le matériau du composant jusque dans la contre-dépouille (24 ; 82).

2. Procédé selon la revendication 1,
**caractérisé en ce que**
l'élément de fixation est un élément en boulon (12), le pas de vis (15) étant réalisé sur une partie tige (16) de l'élément de fixation, et **en ce que** la partie tige (16) est passée à travers un trou préformé dans le composant, c'est-à-dire à travers un composant préperforé (13), avant d'exercer la force locale (K) pour faire déplacer le matériau du composant jusque dans la contre-dépouille (24).

3. Procédé selon la revendication 2,
**caractérisé en ce que**
l'outil présentant la forme de matrice est une matrice (26) et **en ce que** la force locale (K) sur la partie tête (14) de l'élément de fixation est exercée par un second outil (40) qui est agencé dans une position (42) inclinée par rapport à l'axe de symétrie (18) et qui est tourné autour de l'axe de symétrie.

4. Procédé selon la revendication 3,
**caractérisé en ce que**
le second outil (40) comprend une face frontale (44) conique tournée vers la partie tête de l'élément de fixation.

5. Procédé selon la revendication 4,
**caractérisé en ce que**
le second outil (40) travaille directement sur la partie tête (14) de l'élément de fixation (12).

6. Procédé selon l'une des revendications 2 à 4,
**caractérisé en ce que**
le second outil (40) travaille sur la partie tête (14) de l'élément de fixation (12) par l'intermédiaire d'une pièce intermédiaire cylindrique (50).

7. Procédé selon la revendication 6,
**caractérisé en ce que**
la pièce intermédiaire cylindrique (50) et une portion antérieure (52) du second outil (40) tournée vers la pièce intermédiaire cylindrique sont guidées avec un léger jeu radial par une partie de guidage tubulaire (54).

8. Procédé selon l'une des revendications précédentes,
**caractérisé en ce que**
la face frontale (44) du second outil (40) tournée vers la partie tête (14) de l'élément de fixation présente un contact physique (56) au moins sensiblement linéaire avec la partie tête (14) ou avec la pièce intermédiaire (50).

9. Procédé selon l'une des revendications précédentes 2 à 8,
**caractérisé en ce que**
le second outil (40) ou la pièce intermédiaire cylindrique (50) travaille sur une surface annulaire (57) de la partie tête (14) de l'élément de fixation (12).

10. Procédé selon la revendication 2,
**caractérisé en ce que**
la partie tête (14) de l'élément de fixation (12) est reçue dans un évidement (60) d'un second outil (62), dont la face frontale (64) supporte le composant (13) au moins sensiblement à la hauteur de la surface d'appui (22), et **en ce que** la force locale (K) sur le composant (13) est exercée par le premier outil (26') qui est agencé dans la position (42, 42') inclinée par rapport à l'axe de symétrie (18) et qui est tourné autour de l'axe de symétrie.

11. Procédé selon la revendication 10,
**caractérisé en ce que**
le premier outil (26' ; 26") travaille directement sur le composant (13) dans la zone de l'élément de fixation (12).

12. Procédé selon la revendication 10,
**caractérisé en ce que**
le premier outil est réalisé sous forme de pièce intermédiaire cylindrique (26") qui travaille sur le composant (13) dans la zone de l'élément de fixation (12), et **en ce qu'**un autre outil (40) exerce la force locale sur le premier outil (26").

13. Procédé selon la revendication 6,
**caractérisé en ce que**
le premier outil (26) et une portion antérieure (72) du troisième outil tournée vers la pièce intermédiaire cylindrique (50) sont guidés avec un léger jeu radial par une partie de guidage tubulaire (54).

14. Procédé selon l'une des revendications précédentes 2 à 13,
**caractérisé en ce que**
la face frontale du premier outil (40) tournée vers le composant présente un contact physique au moins sensiblement linéaire avec le composant (14).

15. Procédé selon la revendication 12 ou 13,
**caractérisé en ce que**
l'autre outil (40) présente une face frontale (74) conique tournée vers la partie tête (14) de l'élément de fixation (12).

16. Procédé selon l'une des revendications précédentes 2 à 15,
**caractérisé en ce que**
l'élément de fixation (12) présente une gorge annulaire axiale (34) ou des champs concaves dans la surface d'appui ainsi qu'une contre-dépouille radiale (24) qui peut être formée par le pas de vis (15) dans la zone de la partie tête (14), et **en ce que** l'élément de fixation (12) est passé à travers un col annulaire (35) entourant le trou du composant préperforé, depuis le côté du composant (13) détourné du col annulaire (35).

17. Procédé selon la revendication 16,
**caractérisé en ce que**
le premier outil (26) présentant une forme de matrice comprend une saillie annulaire centrale (36) avec une surface intérieure (38) au moins sensiblement conique qui presse le matériau du col annulaire (35) radialement vers l'intérieur jusque dans la contre-dépouille (24).

18. Procédé selon la revendication 1,
**caractérisé en ce que**
l'élément de fixation est un élément écrou (12'), le pas de vis étant réalisé sous forme de perçage taraudé (15') de l'élément de fixation et pouvant être agencé le cas échéant dans la partie tête (14), et le procédé est mis en oeuvre avec un composant perforé ou non perforé (13').

19. Procédé selon la revendication 18,
**caractérisé en ce que**
le premier outil présentant la forme de matrice est une matrice (26"') et **en ce que** la force locale (K) sur la partie tête (14) de l'élément de fixation (12') est exercée au moyen d'un second outil (40') qui est agencé dans une position (42, 42') inclinée par rapport à l'axe de symétrie (18) et qui est tourné autour de l'axe de symétrie.

20. Procédé selon la revendication 19,
**caractérisé en ce que**
le second outil (40') présente une face frontale (98) conique tournée vers la partie tête (14) de l'élément de fixation (13').

21. Procédé selon la revendication 19 ou 20,
**caractérisé en ce que**
le second outil (40') travaille directement sur la partie tête (14) de l'élément de fixation (12').

22. Procédé selon l'une des revendications 18 à 20.
**caractérisé en ce que**
le second outil (70') travaille sur la partie tête (14) de l'élément de fixation (12') par l'intermédiaire d'une pièce intermédiaire cylindrique (50).

23. Procédé selon la revendication 22,
**caractérisé en ce que**
la pièce intermédiaire cylindrique (50) et une portion antérieure (72) du second outil tournée vers la pièce intermédiaire cylindrique sont guidées avec un léger jeu radial par une partie de guidage tubulaire (54).

24. Procédé selon l'une des revendications précédentes 18 à 23,
**caractérisé en ce que**
la face frontale (98 ; 74) du second outil (40' ; 70') tournée vers la partie tête (14) de l'élément de fixation (12') présente un contact physique (97 ; 76) au moins sensiblement linéaire avec la partie tête (14) ou avec la pièce intermédiaire cylindrique (50).

25. Procédé selon l'une des revendications précédentes 18 à 24,
**caractérisé en ce que**
le second outil (40') ou la pièce intermédiaire cylindrique (50) travaille sur une surface annulaire (14') de la partie tête (14) de l'élément de fixation (12').

26. Procédé selon la revendication 18,
**caractérisé en ce que**
la partie tête (14) de l'élément de fixation (12') est reçue dans un évidement (60') d'un second outil (62'), dont la face frontale (64') supporte le composant (13') au moins sensiblement à la hauteur de la surface d'appui (22), et **en ce que** la force locale (K) est exercée sur le composant (13') au moyen du premier outil (26"") qui est agencé dans une position (42, 42') inclinée par rapport à l'axe de symétrie (18) et qui est tourné autour de l'axe de symétrie.

27. Procédé selon la revendication 26,
**caractérisé en ce que**
le premier outil (26"") travaille directement sur le composant (13') dans la zone de l'élément de fixation (12').

28. Procédé selon la revendication 26,
**caractérisé en ce que**
le premier outil (26""') est réalisé comme pièce intermédiaire cylindrique qui travaille sur le composant (13') dans la zone de l'élément de fixation (12'), et **en ce qu'**un troisième outil (70') exerce la force locale (K) sur le premier outil (26""').

29. Procédé selon la revendication 28,
**caractérisé en ce que**
le premier outil (26""') et une portion antérieure (72') du troisième outil (70') tournée vers la pièce intermédiaire cylindrique (76') sont guidés avec un léger jeu radial par une partie de guidage tubulaire (54').

30. Procédé selon l'une des revendications précédentes 18 à 29,
**caractérisé en ce que**
la face frontale du premier outil (26"") tournée vers le composant (13') présente un contact physique au moins sensiblement linéaire avec le composant.

31. Procédé selon la revendication 28 ou 29,
**caractérisé en ce que**
le troisième outil (70') présente une face frontale conique tournée vers la partie tête (14) de l'élément de fixation (12').

32. Procédé selon l'une des revendications précédentes 18 à 31,
**caractérisé en ce que**
l'élément de fixation (12') dans la partie tête (14) présente, radialement à l'intérieur d'une surface d'appui (22) au moins sensiblement annulaire, un évidement (80) pourvu d'au moins une contre-dépouille radiale (82), par exemple une contre-dépouille annulaire (82), ou de contre-dépouilles discrètes (82) ménagées localement sur une paroi de l'évidement, auxquelles sont associés le cas échéant des renfoncements correspondants (84) prévus localement dans la surface d'appui annulaire, et **en ce que** par effet du premier outil (26'" ; 26"" ; 26""') présentant la forme de matrice, le matériau du composant est poussé dans la ou les contre-dépouille(s) (82).

33. Procédé selon la revendication 32,
**caractérisé en ce que**
le composant est une pièce en tôle préperforée (13'), et **en ce que** le premier outil (26" ; 26"" ; 26""') présentant la forme de matrice pousse le matériau de la pièce en tôle autour du bord de la pièce en tôle, généré par la préperforation, également jusque dans l'évidement.

34. Procédé selon la revendication 32,
**caractérisé en ce que**
le composant est une pièce en tôle préperforée (13') munie d'un col annulaire entourant le trou ménagé par la préperforation, col qui est introduit dans l'évidement (80), et **en ce que** l'outil (26"' ; 26"" ; 26""') présentant la forme de matrice pousse le matériau de la pièce en tôle (13') dans la zone du col annulaire jusque dans la ou les contre-dépouille(s) (82).

35. Procédé selon la revendication 32,
**caractérisé en ce que**
l'outil présentant la forme de matrice (26"' ; 26"" ; 26""') pousse le matériau de la pièce en tôle (13') également dans les renfoncements (84) prévus localement dans la surface d'appui annulaire (22).

36. Procédé selon l'une des revendications 18 à 35,
**caractérisé en ce que**
le premier outil (26"' ; 26"" ; 26""') présentant une forme de matrice comprend une saillie annulaire centrale (86) réalisée le cas échéant légèrement conique qui pousse le matériau du composant radialement vers l'extérieur jusque dans la ou les contre-dépouille(s) (82) et le cas échéant jusque dans l'évidement (80).

37. Procédé selon l'une des revendications 18 à 32,
**caractérisé en ce que**
le composant est un composant non perforé (13') et **en ce que** l'outil recevant l'élément de fixation (12') ou le second outil (70' ; 40') comprend une goupille (90) agencée concentriquement à l'élément de fixation, qui traverse le perçage (92) de l'élément de fixation et dont la face frontale libre (94) coopère avec le premier outil creux (26"' ; 26"" ; 26""') présentant la forme de matrice, afin de découper une pastille (96) dans le composant (13'), qui est évacuée à travers le perçage central (93) de l'outil (26"' ; 26"" ; 26""') présentant la forme de matrice.

38. Procédé selon l'une des revendications précédentes, **caractérisé en ce que**
l'élément de fixation (12 ; 12') présente des caractéristiques de blocage anti-rotation (84) dans la zone de la surface d'appui et/ou de la transition de la surface d'appui vers une partie tige éventuelle et/ou dans la zone d'un renfoncement creux (80) de l'élément de fixation, le matériau du composant étant également amené en engagement avec les caractéristiques de blocage anti-rotation par l'effet de la force locale (K) et du mouvement d'approche, caractéristiques qui peuvent être réalisées le cas échéant par ladite au moins une contre-dépouille (24 ; 82) ou par des renfoncements (84) dans la surface d'appui (22).

39. Système comprenant un dispositif de montage d'un élément de fixation (12 ; 12') sur un composant, par exemple sur une pièce en tôle (13 ; 13'), un composant ainsi qu'un élément de fixation, l'élément de fixation présentant un axe de symétrie (18), une partie tête (14) munie d'une surface d'appui (22) venant en contact avec le composant (13), une portion de fixation présentant un pas de vis (15 ; 15'), ainsi qu'au moins une contre-dépouille (24 ; 82) recevant le matériau du composant, et le matériau du composant étant pressé contre la surface d'appui et jusque dans la contre-dépouille au moyen d'un premier outil (26 ; 26' ; 26", 26"', 26"", 26""') qui présente une forme de matrice adaptée à la réalisation de l'élément de fixation,
**caractérisé en ce que**
le dispositif comprend un organe générant une force, qui est conçu pour exercer une force locale (K) sur la partie tête (14) de l'élément de fixation (12 ; 12') ou sur l'outil (26 ; 26' ; 26", 26"', 26"", 26""') latéralement à côté de l'axe de symétrie (18), et pour déplacer cette force locale en forme circulaire autour de l'axe de symétrie, en exécutant simultanément un mouvement d'approche relatif entre l'outil (26 ; 26' ; 26", 26"', 26"", 26""') et l'élément de fixation (12 ; 12') entre lesquels est agencé le composant (13 ; 13'), afin de presser le matériau du composant contre la surface d'appui et jusque dans la contre-dépouille (24 ; 82).

40. Système selon la revendication 39,
**caractérisé en ce que**
l'élément de fixation est un élément en boulon (12), le pas de vis (15) étant réalisé sur une partie tige (16) de l'élément de fixation, et **en ce que** la partie tige (16) est passée à travers un trou préformé dans le composant, c'est-à-dire à travers à travers un trou préformé dans le composant (13), c'est-à-dire à travers un composant préperforé, avant d'exercer la force locale (K) pour faire déplacer le matériau du composant jusque dans la contre-dépouille (24).

41. Système selon la revendication 40,
**caractérisé en ce que**
l'outil présentant la forme de matrice est une matrice (26) et **en ce que** la force locale (K) sur la partie tête (14) de l'élément de fixation peut être exercée par un second outil (40) qui est agencé dans une position (42) inclinée par rapport à l'axe de symétrie (18) et qui est rotatif autour de l'axe de symétrie.

42. Système selon la revendication 41,
**caractérisé en ce que**
le second outil (40) comprend une face frontale (44) conique tournée vers la partie tête de l'élément de fixation.

43. Système selon la revendication 42,
**caractérisé en ce que**
le second outil (40) travaille directement sur la partie tête (14) de l'élément de fixation (12).

44. Système selon l'une des revendications 40 à 43,
**caractérisé en ce que**
le second outil (40) travaille sur la partie tête (14) de l'élément de fixation (12) par l'intermédiaire d'une pièce intermédiaire cylindrique (50).

45. Système selon la revendication 44,
**caractérisé en ce que**
la pièce intermédiaire cylindrique (50) et une portion antérieure (52) du second outil (40) tournée vers la pièce intermédiaire cylindrique sont guidées avec un léger jeu radial par une partie de guidage tubulaire (54).

46. Système selon l'une des revendications précédentes 39 à 45,
**caractérisé en ce que**
la face frontale (44) du second outil (40), tournée vers la partie tête (14) de l'élément de fixation présente un contact physique (56) au moins sensiblement linéaire avec la partie tête (14) ou avec la pièce intermédiaire (50).

47. Système selon l'une des revendications précédentes 39 à 46,
**caractérisé en ce que**
le second outil (40) ou la pièce intermédiaire cylindrique (50) travaille sur une surface annulaire (57) de la partie tête (14) de l'élément de fixation (12).

48. Système selon la revendication 39,
**caractérisé en ce que**
la partie tête (14) de l'élément de fixation (12) est reçue dans un évidement (60) d'un second outil (62), dont la face frontale (64) supporte le composant (13) au moins sensiblement à la hauteur de la surface d'appui (22), et **en ce que** la force locale (K) sur le composant (13) est peut être exercée par le premier outil (26') qui est agencé dans une position (42, 42') inclinée par rapport à l'axe de symétrie (18) et est rotatif autour de l'axe de symétrie.

49. Système selon la revendication 48,
**caractérisé en ce que**
le premier outil (26' ; 26") travaille directement sur le composant (13) dans la zone de l'élément de fixation (12).

50. Système selon la revendication 48,
**caractérisé en ce que**
le premier outil est réalisé sous forme de pièce intermédiaire cylindrique (26") qui travaille sur le composant (13) dans la zone de l'élément de fixation (12), et **en ce qu'**un autre outil (40) exerce la force locale sur le premier outil (26").

51. Système selon la revendication 44,
**caractérisé en ce que**
le premier outil (26) et une portion antérieure (72) du troisième outil tournée vers la pièce intermédiaire cylindrique (50) sont guidés avec un léger jeu radial par une partie de guidage tubulaire (54).

52. Système selon l'une des revendications précédentes 39 à 51,
**caractérisé en ce que**
la face frontale du premier outil (40) tournée vers le composant présente un contact physique au moins sensiblement linéaire avec le composant (14).

53. Système selon la revendication 50 ou 51,
**caractérisé en ce que**
l'autre outil (40) présente une face frontale (74) conique tournée vers la partie tête (14) de l'élément de fixation (12).

54. Système selon l'une des revendications précédentes 39 à 53,
**caractérisé en ce que**
l'élément de fixation (12') présente une gorge annulaire axiale (34) ou des champs concaves dans la surface d'appui ainsi qu'une contre-dépouille radiale (24) susceptible d'être formée par le pas de vis (15) dans la zone de la partie tête (14), **en ce que** le composant présente un trou avec un col entourant le trou, et **en ce que** l'élément de fixation (12) est passé à travers le col annulaire (35) entourant le trou, depuis le côté du composant (13) détourné du col annulaire (35).

55. Système selon la revendication 54,
**caractérisé en ce que**
le premier outil (26) présentant une forme de matrice comprend une saillie annulaire centrale (36) avec une surface intérieure (38) au moins sensiblement conique qui presse le matériau du col annulaire (35) radialement vers l'intérieur jusque dans la contre-dépouille (24).

56. Système selon la revendication 39,
**caractérisé en ce que**
l'élément de fixation est un élément écrou (12'), le pas de vis étant réalisé sous forme de perçage taraudé (15') de l'élément de fixation et étant agencé le cas échéant dans la partie tête (14).

57. Système selon la revendication 56,
**caractérisé en ce que**
le premier outil présentant la forme de matrice est une matrice (26"') et **en ce que** pour exercer la force locale (K) sur la partie tête (14) de l'élément de fixation (12'), il est prévu un second outil (40') qui est agencé dans une position (42, 42') inclinée par rapport à l'axe de symétrie (18) et est rotatif autour de l'axe de symétrie.

58. Système selon la revendication 57,
**caractérisé en ce que**
le second outil (40) présente une face frontale (98) conique tournée vers la partie tête (14) de l'élément de fixation (13').

59. Système selon la revendication 57 ou 58,
**caractérisé en ce que**
le second outil (40') travaille directement sur la partie tête (14) de l'élément de fixation (12').

60. Système selon l'une des revendications 56 à 58.
**caractérisé en ce que**
le second outil (70') travaille sur la partie tête (14) de l'élément de fixation (12') par l'intermédiaire d'une pièce intermédiaire cylindrique (50).

61. Système selon la revendication 60,
**caractérisé en ce que**
la pièce intermédiaire cylindrique (50) et une portion antérieure (72) du second outil tournée vers la pièce intermédiaire cylindrique sont guidées avec un léger jeu radial par une partie de guidage tubulaire (54).

62. Système selon l'une des revendications précédentes 56 à 61,
**caractérisé en ce que**
la face frontale (98 ; 74) du second outil (40' ; 70') tournée vers la partie tête (14) de l'élément de fixation (12') présente un contact physique (97 ; 76) au moins sensiblement linéaire avec la partie tête (14) ou avec la pièce intermédiaire cylindrique (50).

63. Système selon l'une des revendications précédentes 56 à 62,
**caractérisé en ce que**
le second outil (40') ou la pièce intermédiaire cylindrique (50) travaille sur une surface annulaire (14') de la partie tête (14) de l'élément de fixation (12').

64. Système selon la revendication 56,
**caractérisé en ce que**
la partie tête (14) de l'élément de fixation (12') est susceptible d'être reçue dans un évidement (60') d'un second outil (62'), dont la face frontale (64') supporte le composant (13') au moins sensiblement à la hauteur de la surface d'appui (22), et **en ce que** la force locale (K) est exercée sur le composant (13') au moyen du premier outil (26"") qui est agencé dans la position (42, 42') inclinée par rapport à l'axe de symétrie (18) et qui est rotatif autour de l'axe de symétrie.

65. Système selon la revendication 64,
**caractérisé en ce que**
le premier outil (26""') travaille directement sur le composant (13') dans la zone de l'élément de fixation (12').

66. Système selon la revendication 64,
**caractérisé en ce que**
le premier outil (26""') est réalisé comme pièce intermédiaire cylindrique qui travaille sur le composant (13') dans la zone de l'élément de fixation (12'), et **en ce qu'**un troisième outil (70') exerce la force locale (K) sur le premier outil (26""').

67. Système selon la revendication 66,
**caractérisé en ce que**
le premier outil (26""') et une portion antérieure (72') du troisième outil (70') tournée vers la pièce intermédiaire cylindrique (76') sont guidés avec un léger jeu radial par une partie de guidage tubulaire (54').

68. Système selon l'une des revendications précédentes 39 à 67,
**caractérisé en ce que**
la face frontale du premier outil (26"") tournée vers le composant (13') présente un contact physique au moins sensiblement linéaire avec le composant.

69. Système selon la revendication 66 ou 67,
**caractérisé en ce que**
le troisième outil (70') présente une face frontale conique tournée vers la partie tête (14) de l'élément de fixation (12').

70. Système selon l'une des revendications précédentes 39 à 69,
**caractérisé en ce que**
l'élément de fixation (12') dans la partie tête (14) présente, radialement à l'intérieur d'une surface d'appui (22) au moins sensiblement annulaire, un évidement (80) pourvu d'au moins une contre-dépouille radiale (2), par exemple une contre-dépouille annulaire (82), ou de contre-dépouilles discrètes (82) ménagées localement sur une paroi de l'évidement, auxquelles sont associés le cas échéant des renfoncements correspondants (84) prévus localement dans la surface d'appui annulaire, et **en ce que** par effet du premier outil (26"' ; 26"" ; 26""') présentant la forme de matrice, le matériau du composant peut être pressé jusque dans la ou les contre-dépouille(s) (82).

71. Système selon la revendication 70,
**caractérisé en ce que**
le composant est une pièce en tôle préperforée (13'), et **en ce que** le premier outil (26"' ; 26"" ; 26""') présentant la forme de matrice est conçu pour presser le matériau de la pièce en tôle autour du bord de la pièce en tôle, généré par la préperforation, également jusque dans l'évidement.

72. Système selon la revendication 70,
**caractérisé en ce que**
le composant est une pièce en tôle préperforée (13') munie d'un col annulaire entourant le trou ménagé par la préperforation, col qui peut être introduit dans l'évidement (80), et **en ce que** le premier outil (26"' ; 26"" ; 26""') présentant la forme de matrice est conçu pour presser le matériau de la pièce en tôle (13') dans la zone du col annulaire jusque dans la ou les contre-dépouille(s) (82).

73. Système selon la revendication 70,
**caractérisé en ce que**
l'outil présentant la forme de matrice (26"' ; 26"" ; 26""') est conçu pour presser le matériau de la pièce en tôle (13') également jusque dans les renfoncements (84) prévus localement dans la surface d'appui annulaire (22).

74. Système selon l'une des revendications 39 à 73,
**caractérisé en ce que**
le premier outil (26"' ; 26"" ; 26""') présentant une forme de matrice comprend une saillie annulaire centrale (86) réalisée le cas échéant légèrement conique qui est conçue pour presser le matériau du composant radialement vers l'extérieur jusque dans la ou les contre-dépouille(s) (82) et le cas échéant jusque dans l'évidement (60).

75. Système selon l'une des revendications 39 à 70,
**caractérisé en ce que**
le composant est un composant non perforé (13') et **en ce que** l'outil recevant l'élément de fixation (12') ou le second outil (70' ; 40') comprend une goupille (90) agencée concentriquement à l'élément de fixation, qui traverse le perçage (92) de l'élément de fixation et dont la face frontale libre (94) coopère avec le premier outil creux (26"' ; 26"" ; 26""') présentant la forme de matrice, afin de découper une pastille (96) dans le composant (13'), et **en ce que** le perçage central (93) de l'outil (26"' ; 26"" ; 26""') présentant la forme de matrice est conçu pour évacuer la pastille.

76. Système selon l'une des revendications précédentes 39 à 75,
**caractérisé en ce que**
l'élément de fixation (12 ; 12') présente des caractéristiques de blocage anti-rotation (84) dans la zone de la surface d'appui et/ou de la transition de la surface d'appui vers une partie tige éventuelle et/ou dans la zone d'un renfoncement creux (80) de l'élément de fixation, le matériau du composant étant également amené en engagement avec les caractéristiques de blocage anti-rotation par l'effet de la force locale (K) et du mouvement d'approche, caractéristiques qui peuvent être réalisées le cas échéant par ladite au moins une contre-dépouille (24; 82) ou par des renfoncements (84) dans la surface d'appui (22).

77. Système selon l'une des revendications 39 à 76,
**caractérisé en ce que**
il est intégré dans une sorte de perceuse sur colonne pour atteindre les mouvements relatifs.
